(19) Europäisches Patentamt
European Patent Office
Office européen des brevets

(11) EP 4 660 690 A1

(12) # EUROPEAN PATENT APPLICATION
published in accordance with Art. 153(4) EPC

(43) Date of publication:
**10.12.2025 Bulletin 2025/50**

(21) Application number: **24752888.8**

(22) Date of filing: **07.02.2024**

(51) International Patent Classification (IPC):
***G02B 30/00*** *(2020.01)*

(52) Cooperative Patent Classification (CPC):
**G02B 5/18; G02B 27/44; G02B 30/00; G02B 30/20; G02B 30/27; G02F 1/1333; G02F 1/1335; G09G 3/20; G09G 3/36; H04N 13/302; H04N 13/398**

(86) International application number:
**PCT/CN2024/076552**

(87) International publication number:
**WO 2024/165033 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.02.2023 CN 202310122334**

(71) Applicant: **Huawei Technologies Co., Ltd.**
**Shenzhen, Guangdong 518129 (CN)**

(72) Inventors:
- **HUANG, Kairong**
  **Shenzhen, Guangdong 518129 (CN)**
- **YANG, Bo**
  **Shenzhen, Guangdong 518129 (CN)**
- **GAO, Yakun**
  **Shenzhen, Guangdong 518129 (CN)**
- **YANG, Xiaochuan**
  **Shenzhen, Guangdong 518129 (CN)**
- **XU, Wenwei**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) ## DISPLAY CONTROL METHOD AND APPARATUS

(57) A display control method and an apparatus are provided. The display apparatus includes a controller, a display module (11), and a light-transmitting module (12). The controller is configured to: in a two-dimensional display mode, control the display module (11) to display a first two-dimensional image, and control the light-transmitting module (12) to be in a first light-transmitting state, so that the display apparatus displays the first two-dimensional image; and in a three-dimensional display mode, control the display module (11) to display a second two-dimensional image, and control the light-transmitting module (12) to be in a second light-transmitting state, so that the display apparatus displays a naked-eye three-dimensional image. The first light-transmitting state is different from the second light-transmitting state; and in the second light-transmitting state, a lens layer (121) and a grating layer (122) are formed on the light-transmitting module (12). In this way, a problem of limited functions of the display apparatus can be resolved, and functions of the display apparatus can be enriched.

P=ML
1222
1221
1211
FOV
122
121
12
13
11
f
L
P'
FIG. 10



Processed by Luminess, 75001 PARIS (FR)

## Description

This application claims priority to Chinese Patent Application 202310122334.5, filed with the China National Intellectual Property Administration on February 7, 2023 and entitled "DISPLAY CONTROL METHOD AND APPARATUS", which is incorporated herein by reference in its entirety.

## TECHNICAL FIELD

This application relates to the field of display technologies, and in particular, to a display control method and an apparatus.

## BACKGROUND

With development of display technologies, display apparatuses such as a mobile phone (for example, a smartphone), a desktop display, a tablet computer, a television, a vehicle-mounted display, a smartwatch, and e-paper become an indispensable part of people's life.

Currently, a display apparatus has a two-dimensional display mode, and the display apparatus can display a two-dimensional image in the two-dimensional display mode. However, functions of the display apparatus are limited.

## SUMMARY

This application provides a display control method and an apparatus, to resolve a problem of poor performance of a display apparatus. The technical solutions are as follows:

According to a first aspect, this application provides a display apparatus. The display apparatus includes a controller, a display module, and a light-transmitting module. The light-transmitting module is located on a display side (also referred to as a light-emitting side) of the display module. The controller is configured to: in a two-dimensional display mode, control the display module to display a first two-dimensional image, and control the light-transmitting module to be in a first light-transmitting state, so that the first two-dimensional image is displayed on the display side (a side that is of the light-transmitting module in the display apparatus and that is away from the display module) of the display apparatus. The controller is further configured to: in a three-dimensional display mode, control the display module to display a second two-dimensional image, and control the light-transmitting module to be in a second light-transmitting state, so that a naked-eye three-dimensional image corresponding to the second two-dimensional image is displayed on the display side of the display apparatus. The first light-transmitting state is different from the second light-transmitting state, and in the second light-transmitting state, a lens layer and a grating layer that are arranged in a direction close to or away from the display module are formed on the light-transmitting module. It may be understood that the lens layer and the grating layer are not formed on the light-transmitting module in the first light-transmitting state, and the light-transmitting module presents a function similar to that of a planar glass medium in the first light-transmitting state, so that the first two-dimensional image can pass through the light-transmitting module in the first light-transmitting state.

In conclusion, in the display apparatus provided in this application, the controller may control the display module to display different two-dimensional images, and control the light-transmitting module to be in different light-transmitting states, so that the display apparatus displays a two-dimensional image or a naked-eye three-dimensional image. In this way, the display apparatus can not only display the two-dimensional image, but also display the naked-eye three-dimensional image. Therefore, functions of the display apparatus are enriched.

The light-transmitting module may be implemented in a plurality of manners. For example, the light-transmitting module includes a first light-transmitting component and a second light-transmitting component that are arranged in a direction close to or away from the display module. When the lens layer and the grating layer are arranged in the direction away from the display module, the first light-transmitting component and the second light-transmitting component are also arranged in the direction away from the display module. When the lens layer and the grating layer are arranged in the direction close to the display module, the first light-transmitting component and the second light-transmitting component are also arranged in the direction close to the display module. In the second light-transmitting state, the first light-transmitting component is in a light-transmitting state used for forming the lens layer, so that the lens layer is formed on the first light-transmitting component, and the second light-transmitting component is in a light-transmitting state used for forming the grating layer, so that the grating layer is formed on the second light-transmitting component. In the first light-transmitting state, a light-transmitting state of the first light-transmitting component is different from the light-transmitting state used for forming the lens layer, and a light-transmitting state of the second light-transmitting component is different from the light-transmitting state used for forming the grating layer.

Optionally, the first light-transmitting component includes two first electrode layers and a first electrically controlled material layer located between the two first electrode layers. The controller is configured to: when controlling the light-transmitting module to be in the second light-transmitting state, control, through the two first electrode layers, the lens layer to be formed on the first electrically controlled material layer; and when controlling the light-transmitting module to be in the first light-transmitting state, control, through the two first electrode layers, the lens layer not to be formed on the first electrically controlled material layer.

Optionally, the second light-transmitting component includes two second electrode layers, a second electrically controlled material layer located between the two second electrode layers, and a polarizer located on a side that is of the two second electrode layers and that is away from the display module. The controller is configured to: when controlling the light-transmitting module to be in the second light-transmitting state, control the second electrically controlled material layer through the two second electrode layers, so that the grating layer is formed on the second electrically controlled material layer and the polarizer. The controller is configured to: when controlling the light-transmitting module to be in the first light-transmitting state, control, through the two second electrode layers, the grating layer not to be formed on the second electrically controlled material layer.

The polarizer in the second light-transmitting component is configured to: allow light whose polarization direction is a target direction to pass through, and forbid light whose polarization direction is not the target direction to pass through. Light of the second two-dimensional image displayed by the display module is polarized light. In the two-dimensional display mode, a polarization direction of the polarized light when the polarized light is transmitted to the polarizer is the target direction, and the polarized light may pass through the polarizer. In the three-dimensional display mode, if the polarized light is transmitted to a part that is of the polarizer and that is located in a light-transmitting area of the grating layer, a polarization direction of the polarized light is the target direction, and the polarized light may pass through the polarizer; or if the polarized light is transmitted to a part that is of the polarizer and that is located in a light-shielding area of the grating layer, a polarization direction of the polarized light is not the target direction, and the polarized light cannot pass through the polarizer. The controller may control, based on the polarization direction of the polarized light emitted by the display module and a polarization direction of light allowed to pass through the polarizer, the second electrically controlled material layer that the polarized light needs to pass through before being transmitted to the polarizer, so that a film layer similar to a glass medium is formed on the second light-transmitting component in the two-dimensional display mode, and the grating layer is formed on the second light-transmitting component in the three-dimensional display mode.

An electrically controlled material in the first electrically controlled material layer is controlled by electrical signals applied to the first electrode layers on two sides of the first electrically controlled material layer, and an electrically controlled material in the second electrically controlled material layer is controlled by electrical signals applied to the second electrode layers on two sides of the second electrically controlled material layer. In this application, an example in which both the first electrically controlled material layer and the second electrically controlled material layer are liquid crystal layers is used. A liquid crystal in the liquid crystal layer may be any type of liquid crystal, and the liquid crystal in the liquid crystal layer can be deflected under an action of electrical signals applied to electrode layers on two sides of the liquid crystal layer, to change a light-transmitting state of the liquid crystal layer.

Optionally, in the two electrode layers of each of the first light-transmitting component and the second light-transmitting component, one electrode layer may be a common electrode layer, and the other electrode layer may be an array electrode layer. The two electrode layers in the first light-transmitting component may alternatively be common electrode layers. This is not limited in this application.

An electrode layer that is in the first light-transmitting component and that is close to the second light-transmitting component, and/or an electrode layer that is in the second light-transmitting component and that is close to the first light-transmitting component are/is common electrode layers/a common electrode layer. A common electrode layer in a light-transmitting component is placed at a position close to another light-transmitting component. In this way, the common electrode layer can shield an electric field in the another light-transmitting component. This prevents the electric field in the another light-transmitting component from affecting an electrical control material layer in a light-transmitting component in which the common electrode layer is located, and improves stability of a light-transmitting module.

For example, in the first light-transmitting component, a first electrode layer (array electrode layer) that is in the two first electrode layers and that is away from the second light-transmitting component includes a plurality of first electrode strips arranged at intervals, and a first electrode layer (common electrode layer) that is in the two first electrode layers and that is close to the second light-transmitting component includes a first surface electrode; and orthographic projections of the plurality of first electrode strips on the display module are all located in an orthographic projection of the first surface electrode on the display module.

In the second light-transmitting component, a second electrode layer (array electrode layer) that is in the two second electrode layers and that is away from the first light-transmitting component includes a plurality of second electrode strips arranged at intervals, and a second electrode layer (common electrode layer) that is in the two second electrode layers and that is close to the first light-transmitting component includes a second surface electrode; and orthographic projections of the plurality of second electrode strips on the display module are all located in an orthographic projection of the second surface electrode on the display module.

Optionally, the light-transmitting module further includes a common substrate located between the first light-transmitting component and the second light-transmitting component, and the common substrate is light-transmitting and insulated. Orthographic projections of the first light-transmitting component and the second light-transmitting component on the display module are both located in an orthographic projection of the common substrate on the display module. It can be learned that the first light-transmitting component and the second light-transmitting component may share the common substrate, so that a plurality of substrates do not need to be disposed between the two light-transmitting components. This reduces a thickness of the light-transmitting module. It may be understood that the first light-transmitting component and the second light-transmitting component may alternatively not share the common substrate. In this case, the common substrate needs to be replaced with two layers of substrates that one-to-one correspond to the two light-transmitting components.

Optionally, in this application, an example in which the light-transmitting module is implemented by using the first light-transmitting component and the second light-transmitting component that are independent of each other is used. It may be understood that the light-transmitting module may alternatively be implemented by using some structures that are not independent of each other. For example, the light-transmitting module includes two third electrode layers and an electrically controlled material layer located between the two third electrode layers. The controller can control the electrically controlled material layer by applying a special electric field between the two third electrode layers, so that the grating layer and the lens layer are formed on the electrically controlled material layer, and the light-transmitting module is in the second light-transmitting state. In this case, the two third electrode layers and the electrically controlled material layer belong to a whole, but are not two light-transmitting components independent of each other.

Optionally, a lens in the lens layer formed by the light-transmitting module may be a cylindrical lens. Correspondingly, the grating layer formed by the light-transmitting module may include a plurality of strip-shaped light-transmitting areas, and an extension direction of the light-transmitting area may be parallel to an axial meridian of the lens. Alternatively, there may be an included angle between the extension direction of the light-transmitting area and the axial meridian of the lens.

Optionally, the display module includes a plurality of sub-pixels arranged in an array; and the lens is a cylindrical lens, and both an included angle between the axial meridian of the cylindrical lens and a row direction of the sub-pixels an included angle between the axial meridian of the cylindrical lens and a column direction of the sub-pixels are greater than 0 degrees and less than 90 degrees. When the display apparatus displays the naked-eye three-dimensional image, if the axial meridian of the lens is inclined to the row direction and the column direction, resolution losses in the row direction and the column direction that are introduced by the lens layer and the grating layer can be balanced. This prevents moire patterns, and improves display effect of naked-eye three-dimensional image. It may be understood that the axial meridian of the lens may alternatively be parallel to the row direction or the column direction. This is not limited in this application.

Adjacent lenses in the lens layer may be connected or arranged at intervals. This is not limited in this application.

Optionally, a grating period of the grating layer is M times an aperture of the lens in the lens layer, and M is an integer greater than 1. Certainly, the grating period of the grating layer may not be M times the aperture of the lens in the lens layer. When the grating period of the grating layer is M times the aperture of the lens in the lens layer, under an action of the light-transmitting area in the grating layer, an action area of the lens in the lens layer on the display module can be increased, and an action period of the lens can be increased to M times the aperture of the lens. When a focal length of the lens remains unchanged, because an FOV of the naked-eye three-dimensional image is positively correlated with the action period of the lens, the FOV of the naked-eye three-dimensional image displayed by the display apparatus can also be improved. In addition, because the action period of the lens is also positively correlated with a display depth range of the naked-eye three-dimensional image, the display depth range of the naked-eye three-dimensional image displayed by the display apparatus can also be improved.

Optionally, the grating layer includes a plurality of light-transmitting areas arranged at intervals; an orthographic projection of one of the light-transmitting areas on the display module is located in an orthographic projection, on the display module, of a lens that corresponds to the light-transmitting area and that is in the lens layer; and different light-transmitting areas correspond to different lenses in the lens layer, and the plurality of light-transmitting areas correspond to a part of lenses in the lens layer. Certainly, the plurality of light-transmitting areas may alternatively correspond to all lenses in the lens layer.

Optionally, when the plurality of light-transmitting areas correspond to a part of lenses in the lens layer, the light-transmitting module may support a plurality of candidate periods, and the controller can control a grating layer having any one of the plurality of candidate periods to be formed on the light-transmitting module. Therefore, the grating period of the grating layer formed by the light-transmitting module controlled by the controller in the three-dimensional display mode may be any one of the plurality of candidate periods. The grating period of the grating layer is switchable between the plurality of candidate periods. It may be understood that the grating period of the grating layer may alternatively be fixed. This is not limited in this application. The plurality of candidate periods are all greater than the aperture of the lens, and are all integer multiples of the aperture of the lens. In this way, when the grating period of the grating layer formed by the light-transmitting module varies among different candidate periods, a value of M changes accordingly. In addition, the FOV of the naked-eye three-dimensional image is positively correlated with M. Therefore, the controller may switch the grating period of the grating layer between the plurality of candidate periods, to adjust the FOV of the naked-eye three-dimensional image.

Optionally, in the three-dimensional display mode, the display apparatus is configured to sequentially display a plurality of frames of target naked-eye three-dimensional images. A display time period of each frame of target naked-eye three-dimensional image is less than 33.3 milliseconds. When the plurality of light-transmitting areas correspond to a part of lenses in the lens layer, in a display time period of one frame of target naked-eye three-dimensional image, the controller may control, based on a two-dimensional image corresponding to the target naked-eye three-dimensional image, the display module to sequentially display a plurality of frames of second two-dimensional images; and when the display module displays one frame of second two-dimensional image in the plurality of frames of second two-dimensional images, the controller controls the light-transmitting module to be in a second light-transmitting state corresponding to the one frame of second two-dimensional image. In second light-transmitting states corresponding to different frames of second two-dimensional images, the lens layer formed by the light-transmitting module remains unchanged, the grating period of the grating layer formed by the light-transmitting module remains unchanged, and positions of the light-transmitting areas in the grating layer vary.

For example, in second light-transmitting states corresponding to any two adjacent frames of the plurality of frames of second two-dimensional images, lenses corresponding to a same light-transmitting area are adjacent. It may be understood that the lenses corresponding to the same light-transmitting area may not be adjacent to each other. This is not limited in this application.

In the display time period of the one frame of target naked-eye three-dimensional image, if the display module sequentially displays the plurality of frames of second two-dimensional images, and when the display module displays the one frame of second two-dimensional image in the plurality of frames of second two-dimensional images, the light-transmitting module is in the second light-transmitting state corresponding to the frame of second two-dimensional image. In this case, the display apparatus sequentially displays a plurality of frames of auxiliary naked-eye three-dimensional images that one-to-one correspond to the plurality of frames of second two-dimensional images. Because the display time period is less than visual persistence duration of human eyes, the human eyes cannot distinguish between different frames of auxiliary naked-eye three-dimensional images. After a plurality of frames of auxiliary naked-eye three-dimensional images enter the human eyes, the human eyes can see the target naked-eye three-dimensional image, so that the target naked-eye three-dimensional image is displayed. Because in the second light-transmitting states corresponding to different frames of second two-dimensional images, the positions of the light-transmitting areas in the grating layer formed by the light-transmitting module vary, a viewer can see, at a same viewpoint, light emitted by different pixels in the display module. This increases a quantity of pixels seen by the viewer at the viewpoint, and increases resolution of the target frame of naked-eye three-dimensional image seen by the human eyes. In addition, in this case, blocking effect of the grating layer is significantly reduced, and brightness uniformity of the target naked-eye three-dimensional image is improved.

According to a second aspect, this application provides a display control method. The method is performed by a controller in the display apparatus according to any design in the first aspect. The method includes: in a two-dimensional display mode, controlling a display module to display a first two-dimensional image, and controlling a light-transmitting module to be in a first light-transmitting state, so that the first two-dimensional image is displayed on a side that is of the light-transmitting module and that is away from the display module; and in a three-dimensional display mode, controlling the display module to display a second two-dimensional image, and controlling the light-transmitting module to be in a second light-transmitting state, so that a naked-eye three-dimensional image corresponding to the second two-dimensional image is displayed on the side that is of the light-transmitting module and that is away from the display module. In the second light-transmitting state, a lens layer and a grating layer that are arranged in a direction close to or away from the display module are formed on the light-transmitting module, and the first light-transmitting state is different from the second light-transmitting state.

Optionally, a grating period of the grating layer is M times an aperture of a lens in the lens layer, and M is an integer greater than 1; the grating layer includes a plurality of light-transmitting areas arranged at intervals; an orthographic projection of one of the light-transmitting areas on the display module is located in an orthographic projection, on the display module, of a lens that corresponds to the light-transmitting area and that is in the lens layer; and different light-transmitting areas correspond to different lenses in the lens layer, and the plurality of light-transmitting areas correspond to a part of lenses in the lens layer. The method further includes: in the three-dimensional display mode, controlling the grating period of the grating layer to be switched between a plurality of candidate periods.

Optionally, the grating period of the grating layer is M times the aperture of the lens in the lens layer, and M is an integer greater than 1; the grating layer includes the plurality of light-transmitting areas arranged at intervals; the orthographic projection of the one light-transmitting area on the display module is located in the orthographic projection, on the display module, of the lens that corresponds to the light-transmitting area and that is in the lens layer; and the different light-transmitting areas correspond to the different lenses in the lens layer, and the plurality of light-transmitting areas correspond to the part of lenses in the lens layer. When controlling the display module to display the second two-dimensional image, and controlling the light-transmitting module to be in the second light-transmitting state, the controller may determine, based on a two-dimensional image corresponding to one frame of target naked-eye three-dimensional image in a display time period of the one frame of target naked-eye three-dimensional image, to control the display module to sequentially display a plurality of frames of second two-dimensional images, and when the display module displays one frame of second two-dimensional image in the plurality of frames of second two-dimensional images, the controller controls the light-transmitting module to be in a second light-transmitting state corresponding to the one frame of second two-dimensional image, so that a plurality of frames of auxiliary naked-eye three-dimensional images that one-to-one correspond to the plurality of frames of second two-dimensional images are sequentially displayed on the side that is of the light-transmitting module and that is away from the display module. The display time period is less than 33.3 milliseconds; and in second light-transmitting states corresponding to different frames of second two-dimensional images, the lens layer remains unchanged, the grating period of the grating layer remains unchanged, and positions of the light-transmitting areas in the grating layer vary.

According to a third aspect, this application provides a controller. The controller is a controller in the display apparatus according to any design of the first aspect, and the controller includes a first control module and a second control module. The first control module is configured to: in a two-dimensional display mode, control a display module to display a first two-dimensional image, and control a light-transmitting module to be in a first light-transmitting state, so that the first two-dimensional image is displayed on a side that is of the light-transmitting module and that is away from the display module. The second control module is configured to: in a three-dimensional display mode, control the display module to display a second two-dimensional image, and control the light-transmitting module to be in a second light-transmitting state, so that a naked-eye three-dimensional image corresponding to the second two-dimensional image is displayed on the side that is of the light-transmitting module and that is away from the display module. In the second light-transmitting state, a lens layer and a grating layer that are arranged in a direction close to or away from the display module are formed on the light-transmitting module, and the first light-transmitting state is different from the second light-transmitting state.

Optionally, a grating period of the grating layer is M times an aperture of a lens in the lens layer, and M is an integer greater than 1; the grating layer includes a plurality of light-transmitting areas arranged at intervals; an orthographic projection of one of the light-transmitting areas on the display module is located in an orthographic projection, on the display module, of a lens that corresponds to the light-transmitting area and that is in the lens layer; and different light-transmitting areas correspond to different lenses in the lens layer, and the plurality of light-transmitting areas correspond to a part of lenses in the lens layer. The controller further includes a third control module, and the third control module is configured to control, in the three-dimensional display mode, the grating period of the grating layer to be switched between a plurality of candidate periods.

Optionally, the grating period of the grating layer is M times the aperture of the lens in the lens layer, and M is an integer greater than 1; the grating layer includes the plurality of light-transmitting areas arranged at intervals; the orthographic projection of the one light-transmitting area on the display module is located in the orthographic projection, on the display module, of the lens that corresponds to the light-transmitting area and that is in the lens layer; and the different light-transmitting areas correspond to the different lenses in the lens layer, and the plurality of light-transmitting areas correspond to the part of lenses in the lens layer. When controlling the display module to display the second two-dimensional image, and controlling the light-transmitting module to be in the second light-transmitting state, the second control module may determine, based on a two-dimensional image corresponding to one frame of target naked-eye three-dimensional image in a display time period of the one frame of target naked-eye three-dimensional image, to control the display module to sequentially display a plurality of frames of second two-dimensional images, and when the display module displays one frame of second two-dimensional image in the plurality of frames of second two-dimensional images, the second control module controls the light-transmitting module to be in a second light-transmitting state corresponding to the one frame of second two-dimensional image, so that a plurality of frames of auxiliary naked-eye three-dimensional images that one-to-one correspond to the plurality of frames of second two-dimensional images are sequentially displayed on the side that is of the light-transmitting module and that is away from the display module. The display time period is less than 33.3 milliseconds; and in second light-transmitting states corresponding to different frames of second two-dimensional images, the lens layer remains unchanged, the grating period of the grating layer remains unchanged, and positions of the light-transmitting areas in the grating layer vary.

According to a fourth aspect, this application provides a chip. The chip includes a programmable logic circuit and/or program instructions. When the chip runs, the chip is configured to implement the display control method according to any design of the first aspect.

According to a fifth aspect, this application provides a computer-readable storage medium. The computer-readable storage medium stores instructions, and when the instructions are run on a computer, the computer is enabled to perform the display control method according to any design in the second aspect.

According to a sixth aspect, this application provides a computer program product including instructions. When the computer program product is run on a computer, the computer is enabled to perform the display control method according to any design in the second aspect.

For effect of any design in the second aspect to the sixth aspect, refer to effect of a corresponding design in the first aspect. Details are not described herein again in this application.

## BRIEF DESCRIPTION OF DRAWINGS

FIG. 1 is a diagram of a display apparatus of a dual-viewpoint display type according to this application;
FIG. 2 is a diagram of displaying a two-dimensional image by a display apparatus according to this application;
FIG. 3 is a diagram of displaying a naked-eye three-dimensional image by a display apparatus according to this application;
FIG. 4 is a diagram of displaying a two-dimensional image by another display apparatus according to this application;
FIG. 5 is a diagram of displaying a naked-eye three-dimensional image by another display apparatus according to this application;
FIG. 6 is a diagram of displaying a two-dimensional image by another display apparatus according to this application;
FIG. 7 is a diagram of displaying a naked-eye three-dimensional image by another display apparatus according to this application;
FIG. 8 is a diagram of a display apparatus of an ultra-multi-viewpoint display type according to this application;
FIG. 9 is a diagram of parameters of a display apparatus according to this application;
FIG. 10 is a diagram of a structure of a display apparatus according to this application;
FIG. 11 is a diagram of a structure of another display apparatus according to this application;
FIG. 12 is a diagram of a structure of another display apparatus according to this application;
FIG. 13 is a diagram of a structure of another display apparatus according to this application;
FIG. 14 is a diagram of a structure of another display apparatus according to this application;
FIG. 15 is a diagram of a structure of another display apparatus according to this application;
FIG. 16 is a diagram of a structure of another display apparatus according to this application;
FIG. 17 is a diagram of a structure of another display apparatus according to this application;
FIG. 18 is a diagram of a structure of another display apparatus according to this application;
FIG. 19 is a diagram of a structure of another display apparatus according to this application;
FIG. 20 is a diagram of a lens according to this application;
FIG. 21 is a top view of a lens layer according to this application;
FIG. 22 is a top view of a grating layer according to this application;
FIG. 23 is a diagram of a structure of a display apparatus having a grating layer with a grating period according to this application;
FIG. 24 is a diagram of a structure of a display apparatus having a grating layer with another grating period according to this application;
FIG. 25 is a diagram of a structure of a display apparatus having a grating layer with still another grating period according to this application;
FIG. 26 is a diagram of change of a light-transmitting area in a grating layer according to this application;
FIG. 27 is a diagram of a control time sequence of a controller according to this application;
FIG. 28 is a flowchart of a display control method according to this application; and
FIG. 29 is a block diagram of a controller according to this application.

## DESCRIPTION OF EMBODIMENTS

To make principles and technical solutions of this application clearer, the following further describes implementations of this application in detail with reference to accompanying drawings.

A display apparatus plays an important role in people's production and lives. The display apparatus may be an apparatus that can display an image, such as a mobile phone (for example, a smartphone), a desktop display, a tablet computer, a television, a vehicle-mounted display, a smartwatch, or e-paper.

Currently, a display apparatus has a two-dimensional display mode, and the display apparatus can display a two-dimensional image in the two-dimensional display mode. However, functions of the display apparatus having only the two-dimensional display mode are limited.

In a related technology, with development of display technologies, a display apparatus can not only display a two-dimensional image, but also display a naked-eye three-dimensional image. For example, the display apparatus may display the naked-eye three-dimensional image by using a naked-eye stereoscopic display technology. The naked-eye stereoscopic display technology is mainly implemented by using a geometrical optics principle. In the naked-eye stereoscopic display technology, a display apparatus modulates, by using an optical splitter such as a cylindrical lens, a barrier grating, or a microlens array, light of a two-dimensional image displayed by a display module, to split the light of the two-dimensional image, so that the display apparatus displays a naked-eye three-dimensional image corresponding to the two-dimensional image.

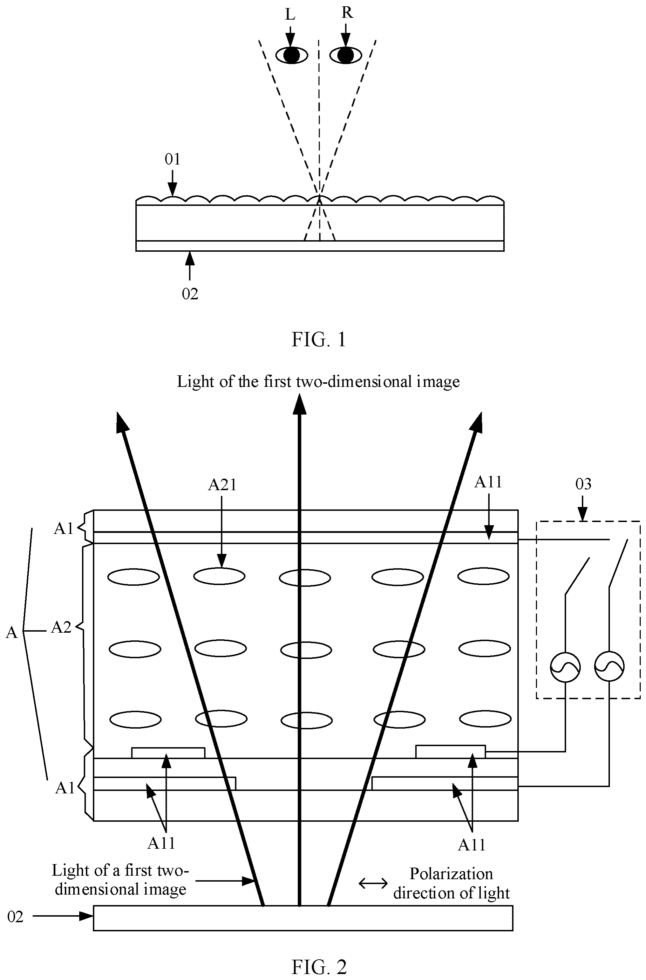

As shown in FIG. 1, for example, a display apparatus modulates, by using a cylindrical lens 01, light rays of a two-dimensional image displayed by a display module 02, and the modulated light rays of the two-dimensional image are propagated in specific directions, so that a left eye (L) and a right eye (R) of a viewer see light rays emitted by different pixels in the display module 02. In this way, the left eye and the right eye of the viewer obtain different parallax images. With reference to a binocular stereoscopic vision principle, the parallax images enable the viewer to have stereoscopic vision, so that the viewer sees a naked-eye three-dimensional image. It may be understood that the accompanying drawings of this application show an approximate transmission path of light. An actual transmission path of light may be the same as or slightly different from the transmission path shown in the accompanying drawings.

From a comprehensive perspective of display effect, manufacturing costs, processing maturity, and the like, a naked-eye stereoscopic display technology implemented by using this principle is most likely to be used for mass production and promotion.

The display module may be a display panel or another structure (for example, a structure including a display panel and another structure) that can display a two-dimensional image. The display panel may be a liquid crystal display (liquid crystal display, LCD), an organic light-emitting diode (organic light-emitting diode, OLED) display panel, a quantum dot light-emitting diode (quantum dot light emitting diodes, QLED) display panel, a micron-level light-emitting diode (micro light-emitting diode, micro-LED) display panel, a sub-millimeter light-emitting diode (mini light-emitting diode, mini-LED) display panel, or the like. A size of a pixel on the micron-level light-emitting diode display panel is less than 100 micrometers, and a size of a pixel on the sub-millimeter light-emitting diode display panel ranges from 100 micrometers to 200 micrometers. In addition, the display panel may be of any size, for example, 3 inches to 110 inches.

Further, the display apparatus may not only display a two-dimensional image and a naked-eye three-dimensional image, but also switch between the two-dimensional image and the naked-eye three-dimensional image. The display apparatus usually switches between the two-dimensional image and the naked-eye three-dimensional image by using an optical splitter such as a lens formed by using liquid crystals. Any type of liquid crystal in this application may be a positive liquid crystal or a negative liquid crystal. After the positive liquid crystal is powered on, a major axis direction of the liquid crystal is arranged in an electric field direction. After the negative liquid crystal is powered on, a minor axis direction of the liquid crystal is arranged in an electric field direction.

The lens formed by using the liquid crystals may include two types: an electrically driven liquid crystal lens and a lens liquid crystal cell.

(1.1) Electrically driven liquid crystal lens

For example, a structure of a display apparatus that switches between a two-dimensional image and a naked-eye three-dimensional image by using the electrically driven liquid crystal lens is shown in FIG. 2. The display apparatus includes a display module 02, a controller 03, and a liquid crystal module A.

Light of a two-dimensional image displayed by the display module 02 is polarized light. If the display module 02 includes a display panel and another structure (not shown in FIG. 2), and the light of the two-dimensional image displayed by the display panel is not polarized light, the another structure may be a device (for example, a polarizer) configured to convert the light into the polarized light. In FIG. 2, an example in which a polarization direction of the polarized light emitted by the display module 02 is a direction parallel to a paper surface is used. It may be understood that the polarization direction of the polarized light may alternatively be another direction, for example, a direction perpendicular to the paper surface in FIG. 2.

The liquid crystal module A is located on a display side (also referred to as a light-emitting side) of the display module 02. The liquid crystal module A includes two substrates A1 disposed opposite to each other, and a liquid crystal layer A2 located between the two substrates A1. The two substrates A1 each have a drive electrode A11, and drive electrodes A11 in at least one substrate A1 are arranged in an array. In FIG. 2, for example, drive electrodes A11 in a lower substrate A1 are arranged in an array, and a drive electrode A11 in an upper substrate A1 is a surface electrode. Electrical signals are applied to the drive electrodes A11, so that liquid crystals A21 in the liquid crystal layer A2 can form a lens (similar to the cylindrical lens 01 in FIG. 1). A major axis direction of a liquid crystal in the accompanying drawings of this application may alternatively be different from a direction shown in the accompanying drawings. This is not limited in embodiments of this application.

The controller 03 is connected to both the display module 02 and the liquid crystal module A (FIG. 2 does not show a connection relationship between the controller 03 and the display module 02). The controller 03 may control the liquid crystal module A, to adjust an arrangement manner of the liquid crystals A21 in the liquid crystal module A, so that the display apparatus displays a two-dimensional image or a naked-eye three-dimensional image.

For example, the liquid crystal is a positive liquid crystal. Still refer to FIG. 2. In a two-dimensional display mode, the controller 03 may not provide electrical signals for the drive electrodes A11, so that major axis directions of the liquid crystals A21 in the liquid crystal layer A2 are unified in a preconfigured direction. The controller 03 may further control the display module 02 to display a first two-dimensional image. When light (polarized light) of the first two-dimensional image displayed by the display module 02 passes through the liquid crystal module A, because deflection directions of the liquid crystals A21 in areas of the liquid crystal layer A2 are unified, the liquid crystal layer A2 does not split the light of the first two-dimensional image. This is equivalent to that the light of the first two-dimensional image passes through a glass-like medium, so that the first two-dimensional image can be displayed on a side that is of the liquid crystal module A2 and that is away from the display module 02.

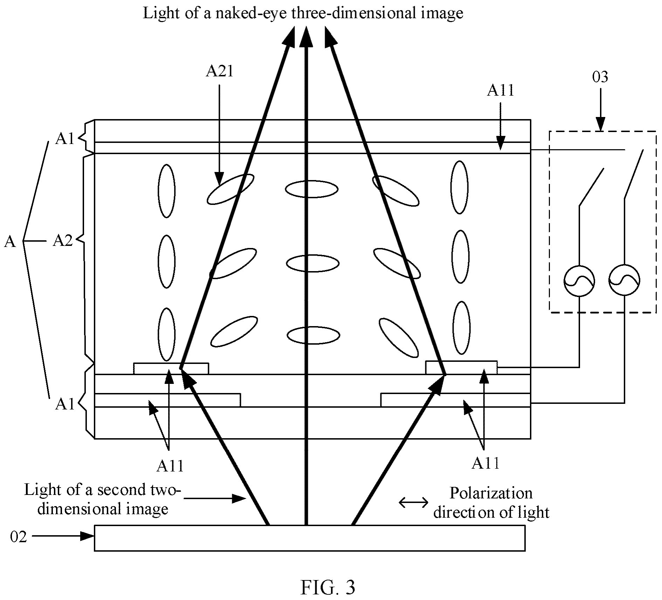

Refer to FIG. 3. In a three-dimensional display mode, the controller 03 may provide electrical signals for the drive electrodes A11, to control the liquid crystals A21 in the liquid crystal layer A2 to deflect, to form a lens. Therefore, a curve of phase delays of the liquid crystals A21 in the liquid crystal layer A2 to light is approximately parabolic, so that a function of the lens can be implemented. The controller 03 may further control the display module 02 to display a second two-dimensional image corresponding to a naked-eye three-dimensional image. When light (polarized light) of the second two-dimensional image displayed by the display module 02 passes through the liquid crystal module A, the liquid crystal layer A2 splits the light of the second two-dimensional image, to change a propagation path of the light of the second two-dimensional image, so that the naked-eye three-dimensional image can be displayed on the side that is of the liquid crystal module A and that is away from the display module 02.

(1.2) Lens liquid crystal cell

The lens liquid crystal cell may be classified into two types: an active liquid crystal lens cell and an active polarizing microlens cell.

(1.2.1) Active liquid crystal lens cell

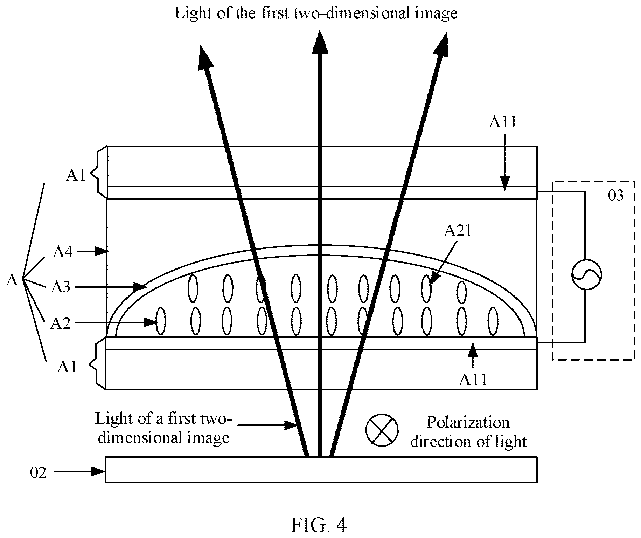

For example, a structure of a display apparatus that switches between a two-dimensional image and a naked-eye three-dimensional image by using the active liquid crystal lens cell is shown in FIG. 4. Refer to FIG. 4. Based on the display apparatuses shown in FIG. 2 and FIG. 3, the liquid crystal module A is changed. For example, the liquid crystal module A further includes a curved layer A3, the liquid crystal layer A2 is located between a substrate A1 (a lower substrate A1 is used as an example in FIG. 4) and the curved layer A3, and drive electrodes A11 are both surface electrodes. The liquid crystal module A further includes a filler A4, for example, ultraviolet rays (ultraviolet rays, UV) curing adhesive (also called UV adhesive), located between the curved layer A3 and the other substrate A1 (an upper substrate A1 is used as an example in FIG. 4). A refractive index of the filler A4 is the same as a refractive index of a first axis of the liquid crystal A21 in the liquid crystal layer A2, and is different from a refractive index of a second axis of the liquid crystal A21. In this application, an example in which the first axis is a minor axis and the second axis is a major axis is used. Alternatively, the first axis may be a major axis and the second axis may be a minor axis. The two substrates A1, the curved layer A3, and the filler A4 form a lens liquid crystal cell.

A polarization direction of light of a two-dimensional image displayed by the display module 02 is parallel to the first axis of the liquid crystal A21 in the liquid crystal module A. In FIG. 4, an example in which the polarization direction is a direction perpendicular to a paper surface is used. Alternatively, the polarization direction may not be the direction perpendicular to the paper surface.

For example, the liquid crystal is a positive liquid crystal. Still refer to FIG. 4. In the two-dimensional display mode, the controller 03 may provide electrical signals for the drive electrodes A11, so that the liquid crystals A21 and the filler A4 in the liquid crystal module A have a same refractive index for polarized light (the light of the first two-dimensional image) from the display module, and the liquid crystal module A does not split the polarized light, so that the display apparatus displays the first two-dimensional image.

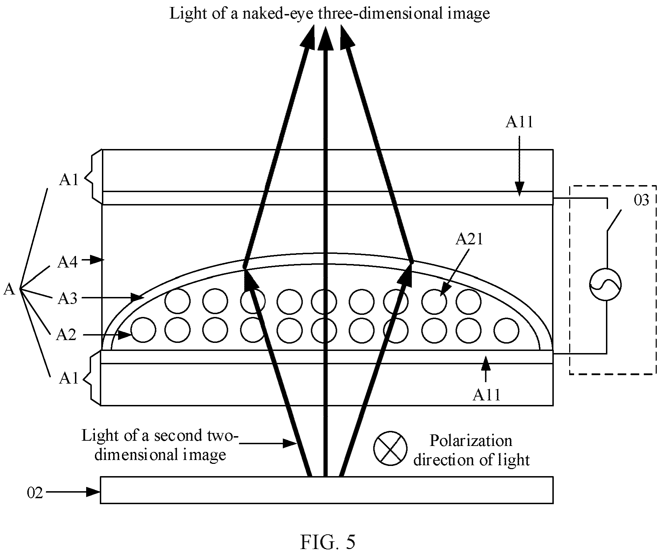

Refer to FIG. 5, in the three-dimensional display mode, the controller 03 may not provide electrical signals for the drive electrodes A11, so that the liquid crystals A21 in the liquid crystal module A are unified in a preconfigured direction. In this case, the liquid crystals A21 and the filler A4 in the liquid crystal module A have different refractive indexes for the polarized light (the light of the first two-dimensional image) from the display module, and the liquid crystals in the liquid crystal module form a lens (similar to the cylindrical lens 01 in FIG. 1). Therefore, the liquid crystal module A splits the polarized light, so that the display apparatus displays a naked-eye three-dimensional image.

Herein, an example in which when the liquid crystals A21 in the liquid crystal module A are in the preconfigured direction, the liquid crystals A21 and the filler A4 in the liquid crystal module A have different refractive indexes for the polarized light from the display module is used. It may be understood that, when the liquid crystals A21 in the liquid crystal module A are in the preconfigured direction, the liquid crystals A21 and the filler A4 in the liquid crystal module A alternatively have a same refractive index for the polarized light from the display module. In this case, in the two-dimensional display mode, the controller 03 does not need to provide electrical signals for the drive electrodes A11, and in the three-dimensional display mode, the controller 03 needs to provide electrical signals for the drive electrodes A11.

(1.2.2) Active polarizing microlens cell

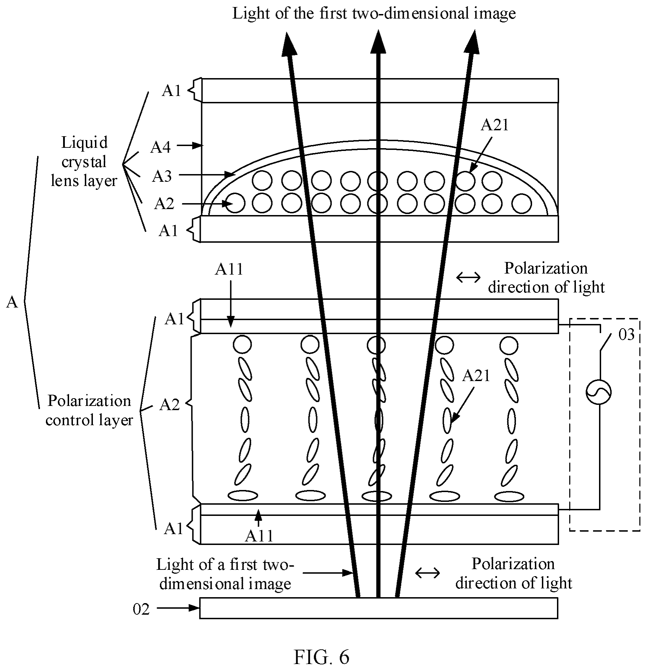

For example, a structure of a display apparatus that switches between a two-dimensional image and a naked-eye three-dimensional image by using the active polarizing microlens cell is shown in FIG. 6. Refer to FIG. 6. Based on the display apparatuses shown in FIG. 4 and FIG. 5, the liquid crystal module A is changed. For example, the liquid crystal module A includes a polarization control layer and a liquid crystal lens layer that are arranged in the direction away from the display module 02. A structure of the liquid crystal lens layer is similar to structures of liquid crystal modules A shown in FIG. 4 and FIG. 5, and a difference lies in that a substrate A1 in the liquid crystal lens layer does not include a drive electrode A11. The polarization control layer includes two substrates A1 disposed opposite to each other, and a liquid crystal layer A2 located between the two substrates A1. The two substrates A1 each have a drive electrode A11, and the drive electrodes A11 are both surface electrodes.

The controller 03 is connected to both the display module 02 and the polarization control layer in the liquid crystal module A (FIG. 6 does not show a connection relationship between the controller and the display module). The controller 03 is configured to control the polarization control layer, to adjust an arrangement manner of liquid crystals A21 in the polarization control layer, so that the display apparatus displays a two-dimensional image or a naked-eye three-dimensional image.

Still refer to FIG. 6. For example, in the two-dimensional display mode, the controller 03 may provide electrical signals for the drive electrodes A11 in the polarization control layer, so that the liquid crystals A21 in the polarization control layer are deflected. After the liquid crystals A21 are deflected, the liquid crystals A21 do not change a polarization direction of polarized light (the light of the first two-dimensional image) from the display module. After the polarized light passes through the polarization control layer, a polarization direction of the polarized light is parallel to a first axis (for example, a minor axis) of a liquid crystal A21 in the liquid crystal lens layer. In this case, after the polarized light reaches the liquid crystal lens layer, liquid crystals A21 and a filler A4 in the liquid crystal lens layer have a same refractive index for the polarized light. Therefore, the liquid crystal lens layer does not split the polarized light, so that the display apparatus displays the first two-dimensional image.

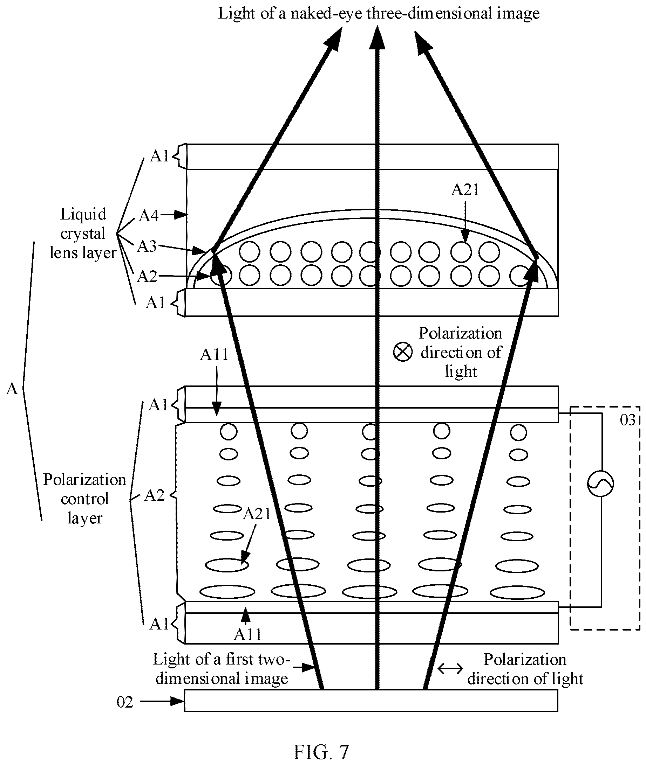

Refer to FIG. 7. In the three-dimensional display mode, the controller 03 may not provide electrical signals for the drive electrodes A11 in the polarization control layer, so that the liquid crystals A21 in the polarization control layer are unified in a preconfigured direction. In this case, the liquid crystals A21 change a polarization direction of the polarized light (the light of the first two-dimensional image) from the display module. After the polarized light passes through the polarization control layer, a polarization direction of the polarized light is parallel to a second axis (for example, a major axis) of the liquid crystal A21 in the liquid crystal lens layer. However, the liquid crystals A21 and the filler A4 in the liquid crystal lens layer have different refractive indexes for the polarized light, and the liquid crystals A21 in the liquid crystal lens layer form a lens (similar to the cylindrical lens 01 in FIG. 1). Therefore, the liquid crystal lens layer splits the polarized light, to change a propagation path of the light of the second two-dimensional image, so that the display apparatus displays a naked-eye three-dimensional image.

It can be learned that, during switching between the two-dimensional image and the naked-eye three-dimensional image, the liquid crystal lens layer does not change, but deflection of the liquid crystals in the polarization control layer changes, so that a polarization direction of the polarized light from the display module changes. The liquid crystal lens layer has different functions on polarized light in different polarization directions, so that switching between the two-dimensional image and the naked-eye three-dimensional image can be implemented.

Herein, an example in which when the liquid crystals in the polarization control layer are in the preconfigured direction, the liquid crystals change the polarization direction of the polarized light from the display module is used. It may be understood that, when the liquid crystals in the liquid crystal module are in the preconfigured direction, the liquid crystals do not change the polarization direction of the polarized light from the display module. In this case, in the two-dimensional display mode, the controller needs to provide electrical signals for the drive electrodes, and in the three-dimensional display mode, the controller does not need to provide electrical signals for the drive electrodes. The lenses shown in FIG. 2 to FIG. 7 may alternatively have other shapes. This is not limited in embodiments of this application.

The display apparatus in the foregoing content can not only display a two-dimensional image, but also display a naked-eye three-dimensional image. In the field of display technologies, there are some display apparatuses that can display a naked-eye three-dimensional image but cannot display a two-dimensional image. The display apparatuses split light of a two-dimensional image emitted by a display module by using a passive optical splitter, so that the display apparatus displays a naked-eye three-dimensional image. However, the passive optical splitter in the display apparatus is fixed and remains unchanged. Therefore, when the display apparatus needs to display the two-dimensional image, the optical splitter presents effect of splitting pixels of the display module. Consequently, the display apparatus cannot effectively display the two-dimensional image. Because a viewer has a high requirement for displaying both the two-dimensional image and the naked-eye three-dimensional image, functions of a display apparatus that cannot display the two-dimensional image are limited, and a display apparatus that can display the two-dimensional image and the naked-eye three-dimensional image is increasingly popular with the viewer.

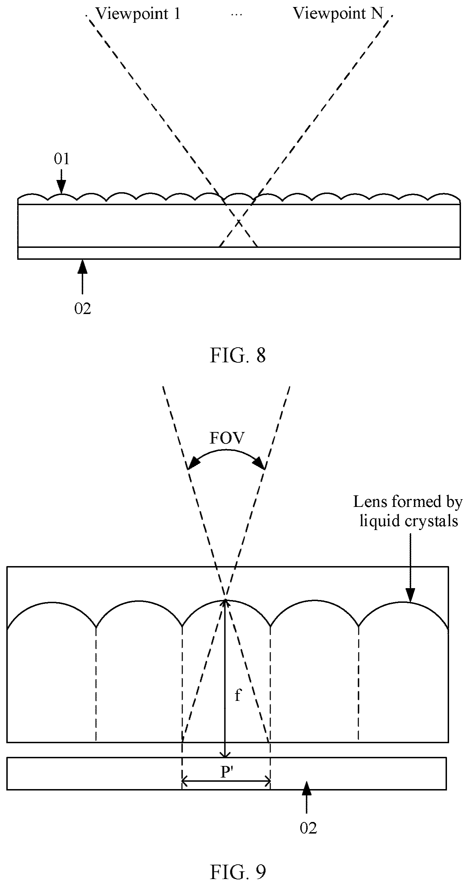

Further, a display type shown in FIG. 1 may be referred to as a dual-viewpoint display type. A display side of a display apparatus of the dual-viewpoint display type has two viewpoints. When a left eye and a right eye of a viewer are respectively located at the two viewpoints, the viewer can see a naked-eye three-dimensional image. With improvement of screen resolution and rendering computing power, the naked-eye stereoscopic display technology gradually develops from the dual-viewpoint display type shown in FIG. 1 to an ultra-multi-viewpoint display type shown in FIG. 8. A quantity of viewpoints on a display side of a display apparatus of the ultra-multi-viewpoint display type is far greater than 2, and the viewer can see a naked-eye three-dimensional image at a plurality of positions on the display side of the display apparatus. One viewpoint may be considered as a direction of one light ray. The display apparatus of the ultra-multi-viewpoint display type has a large quantity of viewpoints, and can simulate a light-emitting status of a real object by using sufficient discrete light rays. Compared with the display apparatus of the dual-viewpoint type, the display apparatus of the ultra-multi-viewpoint type has continuous motion parallax, can alleviate a focus vergence conflict, and has advantages such as greater viewing freedom and enhanced comfort.

The display apparatus of the ultra-multi-viewpoint type imposes a new requirement on a key indicator of naked-eye stereoscopic display: A naked-eye three-dimensional image displayed by the display apparatus requires a larger field of view (field of view, FOV) and a larger display depth range (that is, a depth of field). An FOV of a main viewing area is usually required to be greater than 60° (degree), to obtain seamless and uninterrupted viewing experience. The display depth range is negatively correlated with crosstalk between viewpoints, and the crosstalk between the viewpoints is negatively correlated with an action period of a lens. Therefore, the display depth range is positively correlated with the action period of the lens. To obtain a larger display depth range, the action period of the lens needs to be large, so that the lens covers more sub-pixels of the display module. This reduces the crosstalk between the viewpoints, and improves the display depth range. The lens herein is a cylindrical lens, and the action period of the lens is a width of a pixel area that meets an imaging correspondence and that is covered by lenses on the display module in an arrangement direction of the lenses. Light emitted by pixels in the pixel area that meets the imaging correspondence and that is in the display module is transmitted to a viewpoint of the display apparatus after passing through the lenses.

For example, as shown in FIG. 9, an action period of a lens is $P' = P \times \frac{j}{j+f}$, where P represents a period of a structure (for example, the lens) located on the display side of the display module in the display apparatus, j represents a viewing distance, that is, a distance between an eye of the viewer and the display apparatus, and f is a focal length of the lens. Because j is usually far greater than f, $\frac{j}{j+f}$ is approximately equal to 1. Therefore, P'≈P.

However, an FOV of a naked-eye three-dimensional image displayed by the display apparatus that switches between a two-dimensional image and a naked-eye three-dimensional image by using the lens formed by using the liquid crystals is small, and a display depth range of the naked-eye three-dimensional image is also small. The possible reasons are as follows:

(2.1) For the display apparatus that switches between a two-dimensional image and a naked-eye three-dimensional image by using the electrically driven liquid crystal lens in (1.1), analysis is as follows:

A focal length of the lens is $f = \frac{r_0^2}{2d\delta n}$. $r_0$ is half of an aperture L of the lens. For the lens in (1.1), P is equal to L. Therefore, $r_0 = \frac{L}{2} = \frac{P}{2} \approx \frac{P'}{2}$. *d* is a liquid crystal cell thickness of a liquid crystal module (that is, a spacing between two substrates), and $\delta n$ is a difference between refractive indexes of a major axis and a minor axis of a liquid crystal.

In addition, a relationship between the focal length f of the lens, the action period P' of the lens, and a field of view FOV is $f = \frac{P'}{2\tan(FOV/2)} \approx \frac{P}{2\tan(FOV/2)}$.

$r_0 = P/2$ is substituted into $f = \frac{r_0^2}{2d\delta n}$, and $d \approx \frac{P\tan(FOV/2)}{4\delta n}$ may be obtained with reference to $f \approx \frac{P}{2\tan(FOV/2)}$. It can be learned from this formula that both the FOV and P are positively correlated with d. Because P is positively correlated with the display depth range of the naked-eye three-dimensional image displayed by the display apparatus, if both the FOV and the display depth range of the naked-eye three-dimensional image are large, the liquid crystal cell thickness d needs to be increased. However, due to a process limitation, it is difficult to process the display apparatus when the liquid crystal cell thickness d is large.

For example, it is assumed that P=600 micrometers, $\delta n$ =0.2, and a 60° FOV needs to be implemented. In this case, according to $d \approx \frac{P\tan(FOV/2)}{4\delta n}$, d=433 micrometers may be obtained through calculation, which is far beyond a liquid crystal cell thickness level (less than 100 micrometers) that can be achieved by using a current processing technology.

In addition, if the liquid crystal cell thickness is excessively large, there may be adverse phenomena such as uneven alignment of liquid crystal molecules, a slow liquid crystal response speed, and an excessively large spacer (spacer, a spherical object in the liquid crystal cell, used to support the liquid crystal cell) that result in "sparkle" effect, negatively affecting viewing experience. Therefore, this technology cannot meet requirements of a naked-eye three-dimensional image for a large FOV and a large display depth range in terms of a processing process.

(2.2) For the display apparatus that switches between a two-dimensional image and a naked-eye three-dimensional image by using the lens liquid crystal cell in (1.2), analysis is as follows:

A focal length of a lens is $f = \frac{r}{n_e - n_o} \approx \frac{P}{2\tan(FOV/2)}$. r is a curvature radius of the lens, $n_e$ is a refractive index of a major axis of a liquid crystal, and $n_o$ is a refractive index of a minor axis of the liquid crystal.

Because *r*>*P*/2, a minimum value of $\frac{r}{P/2}$ is 1. It can be learned from $f = \frac{r}{n_e - n_o} \approx \frac{P}{2\tan(FOV/2)}$ that when $\frac{r}{P/2}$ is the minimum value 1, an FOV reaches a maximum value 2 arctan($n_e$ - $n_o$).

It can be learned that the maximum value 2arctan($n_e$ - $n_o$) of the FOV is limited by $n_e$ and $n_o$. A refractive index difference ($n_e$ - $n_o$) between a major axis and a minor axis of a commonly used liquid crystal is usually 0.2. 0.2 is substituted into the maximum value 2 arctan($n_e$ - $n_o$) of the FOV, to obtain a maximum value 22.67° of the FOV. Therefore, it is difficult to meet the requirement of a large FOV (FOV>60°).

In addition, because that P is positively correlated with the display depth range of the naked-eye three-dimensional image displayed by the display apparatus, to improve the display depth range of the naked-eye three-dimensional image, P usually needs to be large, so that a width of the lens can cover 13 to 30 sub-pixels in the display module. In this case, P approximately ranges from 400 micrometers to 1000 micrometers. However, if a large FOV is further required in this case, $\frac{r}{P/2}$ needs to be the minimum value 1, r= P 12, the lens is hemispherical, and a liquid crystal cell thickness needs to reach at least a value of r, that is, 200 micrometers to 500 micrometers. The liquid crystal cell thickness is also far greater than the liquid crystal cell thickness level (less than 100 micrometers) that can be reached by using the current processing technology.

It can be learned that the display apparatuses provided in (1.1) and (1.2) cannot support a naked-eye three-dimensional image to have a large FOV, and cannot support the naked-eye three-dimensional image to have a large display depth range.

In a related technology, there is a display apparatus different from the display apparatuses provided in (1.1) and (1.2). Based on the display apparatus provided in (1.1), the display apparatus includes a plurality of layers of liquid crystal modules, a controller may control these liquid crystal modules to be used for forming a plurality of layers of lenses, and these lenses match each other, to finally display a naked-eye three-dimensional image. A liquid crystal cell thickness of each layer of liquid crystal module in the plurality of layers of liquid crystal modules is less than the liquid crystal cell thickness of the liquid crystal module in (1.1). However, the display apparatus is highly complex, has high requirements on a process and a material, and has high difficulty in controlling the liquid crystal modules. In addition, although the liquid crystal cell thickness of each layer of liquid crystal module is less than the liquid crystal cell thickness of the liquid crystal module in (1.1), the liquid crystal cell thickness of each layer of liquid crystal module still exceeds the liquid crystal cell thickness level (less than 100 micrometers) that can be achieved by using the current processing technology. In addition, it can be learned from $f \approx \frac{P}{2\tan(FOV/2)}$ that f is negatively correlated with the FOV. To make the FOV large, f needs to be small. However, in a case of the plurality of layers of liquid crystal modules, there is glass spaced between adjacent liquid crystal modules, limiting an achievable shortest focal length f. Therefore, an increase of the FOV is restricted. Therefore, the display apparatus cannot support a naked-eye three-dimensional image to have a large FOV, and cannot support the naked-eye three-dimensional image to have a large display depth range.

This application provides a display apparatus. The display apparatus can not only display a two-dimensional image, but also display a naked-eye three-dimensional image. Therefore, functions of the display apparatus are enriched. In addition, the display apparatus can support the naked-eye three-dimensional image to have a large FOV, and can further support the naked-eye three-dimensional image to have a large display depth range. In addition, a structure of the display apparatus is simple, control difficulty is low, and the display apparatus has low requirements on both a process and a material.

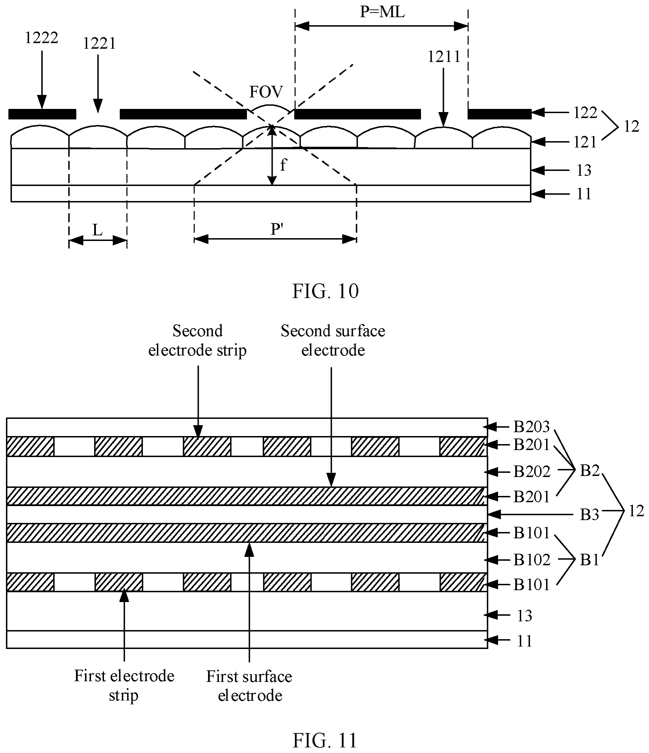

For example, as shown in FIG. 10, the display apparatus provided in embodiments of this application includes a display module 11, a light-transmitting module 12 located on a light-emitting side of the display module 11, and a controller (not shown in FIG. 10).

For the display module 11, refer to the display module 02 in the foregoing embodiments. Details are not described herein again in embodiments of this application.

The light-transmitting module 12 has a first light-transmitting state and a second light-transmitting state, and the first light-transmitting state is different from the second light-transmitting state. The light-transmitting module 12 shown in FIG. 10 is in the second light-transmitting state.

In the first light-transmitting state, the light-transmitting module 12 does not split incident light, and therefore plays a role similar to that of a planar glass medium. When the light-transmitting module 12 is in the first light-transmitting state, after light that is of a first two-dimensional image and that is incident from one side of the light-transmitting module 12 passes through the light-transmitting module 12, the first two-dimensional image can be displayed on the other side of the light-transmitting module.

In the second light-transmitting state, the light-transmitting module 12 splits incident light. When the light-transmitting module 12 is in the second light-transmitting state, after light that is of a second two-dimensional image corresponding to a naked-eye three-dimensional image and that is incident from one side of the light-transmitting module 12 passes through the light-transmitting module 12, the naked-eye three-dimensional image can be displayed on the other side of the light-transmitting module.

Still refer to FIG. 10. In the second light-transmitting state, a lens layer 121 and a grating layer 122 that are arranged in a direction away from the display module 11 (an upward direction in FIG. 10) are formed on the light-transmitting module 12. Alternatively, a lens layer 121 and a grating layer 122 may be arranged in a direction close to the display module 11 (a downward direction in FIG. 10). The first light-transmitting state is different from the second light-transmitting state. Therefore, the lens layer 121 and the grating layer 122 are not formed when the light-transmitting module 12 is in the first light-transmitting state.

The lens layer 121 may include a plurality of lenses 1211 (for example, a plurality of lenses arranged in an array). The grating layer 122 includes a plurality of light-shielding areas 1222 and a light-transmitting area 1221 located between adjacent light-shielding areas 1222. The grating layer 122 may include a plurality of light-transmitting areas 1221 arranged at intervals. An orthographic projection of a light-transmitting area 1221 on the display module 11 is located in an orthographic projection, on the display module 11, of a lens 1211 that corresponds to the light-transmitting area 1221 and that is in the lens layer 121. Different light-transmitting areas 1221 correspond to different lenses 1211 in the lens layer 121. In FIG. 10, an example in which the plurality of light-transmitting areas 1221 in the grating layer 122 correspond to a part of lenses in the lens layer 121 is used. Alternatively, the plurality of light-transmitting areas 1221 may correspond to all the lenses 1211 in the lens layer 121. In FIG. 10, an example in which adjacent lenses 1211 in the lens layer 121 are connected to each other is used. The adjacent lenses 1211 may alternatively be spaced from each other. This is not limited in this application.

An orthographic projection of an object (for example, the light-transmitting area 1221 or the lens 1211) on the display module 11 is a projection formed on a light-emitting surface of the display module 11 when light perpendicular to the light-emitting surface of the display module 11 is irradiated to the display module 11 from a side that is of the object and that is away from the display module 11.

Optionally, in FIG. 10, a grating period P of the grating layer 122 is M times an aperture L of the lens 1211, where M is an integer greater than 1. Alternatively, a grating period P of the grating layer 122 may not be M times an aperture L of the lens 1211. For example, the grating period P of the grating layer 122 may be equal to the aperture L of the lens 1211.

The light-transmitting module 12 can switch between the first light-transmitting state and the second light-transmitting state. When the light-transmitting module 12 does not need to split light, the light-transmitting module 12 can be in the first light-transmitting state; or when the light-transmitting module 12 needs to split light, the light-transmitting module 12 can be in the second light-transmitting state.

Further, still refer to FIG. 10. The controller in the display apparatus is connected to both the display module 11 and the light-transmitting module 12, and the controller is configured to: in a two-dimensional display mode, control the display module 11 to display a first two-dimensional image, and control the light-transmitting module 12 to be in the first light-transmitting state, so that the first two-dimensional image is displayed on a side that is of the light-transmitting module 12 and that is away from the display module 11. The controller is further configured to: in a three-dimensional display mode, control the display module 11 to display a second two-dimensional image, and control the light-transmitting module 12 to be in the second light-transmitting state, so that a naked-eye three-dimensional image corresponding to the second two-dimensional image is displayed on the side that is of the light-transmitting module 12 and that is away from the display module 11. For example, the light-transmitting module 12 may include an electrode layer. The controller may be connected to the electrode layer in the light-transmitting module 12, and control a light-transmitting state of the light-transmitting module 12 by controlling whether to apply an electrical signal to the electrode layer. Herein, an example in which the controller controls the light-transmitting state of the light-transmitting module 12 in an electrical control manner is used. Optionally, the controller may alternatively control the light-transmitting state of the light-transmitting module 12 in a manner such as magnetic control (for example, control the light-transmitting state of the light-transmitting module 12 by controlling transparent magnetic particles to adjust a pose in the magnetic control manner). This is not limited in embodiments of this application.

The light-transmitting module 12 may be implemented in a plurality of manners. One of the implementations as is used as an example for description below. For example, as shown in FIG. 11, the light-transmitting module 12 includes a first light-transmitting component B1 and a second light-transmitting component B2. When the lens layer 121 and the grating layer 122 are arranged in a direction away from the display module 11, the first light-transmitting component B1 and the second light-transmitting component B2 are also arranged in the direction away from the display module 11. When the lens layer 121 and the grating layer 122 are arranged in a direction close to the display module 11, the first light-transmitting component B1 and the second light-transmitting component B2 are also arranged in the direction close to the display module 11. In the second light-transmitting state, the first light-transmitting component B1 is in a light-transmitting state used for forming the lens layer 121, so that the lens layer 121 is formed on the first light-transmitting component B1; and the second light-transmitting component B2 is in a light-transmitting state used for forming the grating layer 122, so that the grating layer 122 is formed on the second light-transmitting component B2. In the first light-transmitting state, a light-transmitting state of the first light-transmitting component B1 is different from the light-transmitting state used for forming the lens layer 121, and a light-transmitting state of the second light-transmitting component B2 is different from the light-transmitting state used for forming the grating layer 122.

Optionally, the first light-transmitting component B1 includes two first electrode layers B101 and a first electrically controlled material layer B102 located between the two first electrode layers B101. The controller is configured to: when controlling the light-transmitting module 12 to be in the second light-transmitting state, control, through the two first electrode layers B101, the lens layer 121 to be formed on the first electrically controlled material layer B102; and when controlling the light-transmitting module 12 to be in the first light-transmitting state, control, through the two first electrode layers B101, the lens layer 121 not to be formed on the first electrically controlled material layer B102.

Optionally, the second light-transmitting component B2 includes two second electrode layers B201, a second electrically controlled material layer B202 located between the two second electrode layers B201, and a polarizer B203 located on a side that is of the two second electrode layers B202 and that is away from the display module 11. The controller is configured to: when controlling the light-transmitting module 12 to be in the second light-transmitting state, control the second electrically controlled material layer B202 through the two second electrode layers B201, so that the grating layer 122 is formed on the second electrically controlled material layer B202 and the polarizer B203. The controller is configured to: when controlling the light-transmitting module 12 to be in the first light-transmitting state, control, through the two second electrode layers B202, the grating layer 122 not be formed on the second electrically controlled material layer B203.

An electrically controlled material in the first electrically controlled material layer B102 is controlled by electrical signals applied to the first electrode layers B101 on two sides of the first electrically controlled material layer B102, and an electrically controlled material in the second electrically controlled material layer B202 is controlled by electrical signals applied to the second electrode layers B201 on two sides of the second electrically controlled material layer B202. In this application, an example in which both the first electrically controlled material layer B102 and the second electrically controlled material layer B202 are liquid crystal layers is used, a liquid crystal in the liquid crystal layer may be any type of liquid crystal (for example, a twist nematic (twist nematic, TN) type, a vertical alignment (vertical alignment, VA) type, an in-plane switching (in-plane switching, IPS) type, or a fringe field switching (fringe filed switching, FFS) type). The liquid crystal in the liquid crystal layer can be deflected under an action of electrical signals applied to the electrode layers on two sides of the liquid crystal layer. Optionally, the electrically controlled material layer may alternatively be another material layer, for example, a liquid material layer having an electrowetting characteristic, or a material layer formed by transparent magnetic particles and a liquid medium.

The first light-transmitting component B1 may be implemented in various manners. For example, the first light-transmitting component B1 may be the liquid crystal module in the display apparatus described in (1.1), (1.2.1), or (1.2.2).

The polarizer B203 in the second light-transmitting component B2 is configured to: allow light whose polarization direction is a target direction to pass through, and forbid light whose polarization direction is not the target direction to pass through. Light of the second two-dimensional image displayed by the display module 11 is polarized light. In the two-dimensional display mode, a polarization direction of the polarized light when the polarized light is transmitted to the polarizer B203 is the target direction, and the polarized light may pass through the polarizer B203. In the three-dimensional display mode, if the polarized light is transmitted to a part that is of the polarizer B203 and that is located in a light-transmitting area of the grating layer, a polarization direction of the polarized light is the target direction, and the polarized light may pass through the polarizer B203; or if the polarized light is transmitted to a part that is of the polarizer B203 and that is located in a light-shielding area of the grating layer, a polarization direction of the polarized light is not the target direction, and the polarized light cannot pass through the polarizer B203. The controller may control, based on a polarization direction of polarized light emitted by the display module 11 and a polarization direction of light allowed to pass through the polarizer B203, an electrically controlled material layer that the polarized light needs to pass through before being transmitted to the polarizer B203, so that a film layer similar to a glass medium is formed on the second light-transmitting component B2 in the two-dimensional display mode, and the grating layer is formed on the second light-transmitting component B2 in the three-dimensional display mode.

In conclusion, in the display apparatus provided in embodiments of this application, the controller may control the display module to display different two-dimensional images, and control the light-transmitting module to be in different light-transmitting states, so that the display apparatus displays a two-dimensional image or a naked-eye three-dimensional image. In this way, the display apparatus can not only display the two-dimensional image, but also display the naked-eye three-dimensional image. Therefore, functions of the display apparatus are enriched.

In the three-dimensional display mode, the controller controls the lens layer and the grating layer to be formed on the light-transmitting module, and the lens layer can split light. In addition, when the grating period of the grating layer is M times the aperture of the lens in the lens layer, a period P of a structure located on a display side of the display module in the display apparatus changes to ML. Under an action of the light-transmitting area in the grating layer, an action area of the lens in the lens layer on the display module can be increased, and an action period of the lens can be increased to M times the aperture L of the lens. When a focal length of the lens remains unchanged, because an FOV of the naked-eye three-dimensional image is positively correlated with the action period of the lens, the FOV of the naked-eye three-dimensional image displayed by the display apparatus can also be improved. In addition, because the action period of the lens is also positively correlated with a display depth range of the naked-eye three-dimensional image, the display depth range of the naked-eye three-dimensional image displayed by the display apparatus can also be improved.

The following describes a principle of improving the FOV and the display depth range of the naked-eye three-dimensional image by using the grating layer.

(3.1) For example, the first light-transmitting component B1 is the liquid crystal module in (1.1).

When the light-transmitting module is in the second light-transmitting state, the light-transmitting area of the grating layer formed by the light-transmitting module is used to determine a lens that effectively works (referred to as an effective lens) in the lens layer formed by the light-transmitting module. A lens corresponding to the light-transmitting area in the grating layer is the effective lens. Because P=ML, a duty cycle of the effective lens to all lenses in the lens layer is 1:M.

An aperture of the effective lens in the lens layer 121 is L. Under an action of the light-transmitting area 1221 in the grating layer 122, an action area of the effective lens on the display module 11 becomes larger, so that an action period of the effective lens is P'≈P=ML shown in FIG. 10.

P'≈P=ML is substituted into the foregoing formula $f \approx \frac{P}{2\tan(FOV/2)}$, to obtain $f \approx \frac{P}{2\tan(FOV/2)} = \frac{ML}{2\tan(FOV/2)}$.

According to the formula, FOV≈2 arctan(*ML*/2*f*) may be further obtained through deduction. It can be learned that the FOV of the naked-eye three-dimensional image displayed by the display apparatus in this application is related to M, L, and f, and the FOV can be increased by increasing M. The FOV is irrelevant to a liquid crystal cell thickness d. Therefore, a liquid crystal cell with a small thickness may be used, and manufacturing of the display apparatus is not limited by a process. When the display apparatus is compared with the display apparatus with the same aperture L in (1.1), the FOV is increased with introduction of M.

Further, because $r_0$ is equal to half of the aperture L of the lens, $r_0 = L/2$. $r_0 = L/2$ is substituted into the foregoing formula $f = \frac{r_0^2}{2d\delta n}$, and then $d \approx \frac{L * \tan(FOV/2)}{4\delta n M} = \frac{P\tan(FOV/2)}{4\delta n M^2}$ may be obtained with reference to the foregoing formulas $f \approx \frac{P}{2\tan(FOV/2)}$ and P'≈P=ML.

It can be learned from this formula that, when the FOV is increased and P'(≈P) is increased to increase the display depth range of the naked-eye three-dimensional image, the liquid crystal cell thickness d may be reduced by increasing M. Therefore, the display apparatus may use a liquid crystal cell with a small thickness, and manufacturing of the display apparatus is not limited by a process. In addition, when the display apparatus is compared with the display apparatus with an aperture P in (1.1), to implement a same FOV, a liquid crystal cell thickness of the display apparatus provided in this application can be reduced to $\frac{1}{M^2}$ times the liquid crystal cell thickness of the display apparatus in (1.1).

For example, it is assumed that the FOV required for the naked-eye three-dimensional image is 90°. In this case, to ensure a large display depth range of the naked-eye three-dimensional image, the required action period of the lens needs to be set to 1.2 millimeters. If the display apparatus in (1.1) is used, a liquid crystal cell thickness needs to be 1.5 millimeters. This is far beyond a processable range of a liquid crystal cell thickness. If the display apparatus provided in embodiments of this application is used, a lens layer with a lens aperture of 0.3 millimeters and a grating layer with a grating period of 1.2 millimeters may be used. An opening width of the light-transmitting area in the grating layer is 0.2 millimeters, and M is set to 4. It can be learned through calculation that a liquid crystal cell thickness is 93.75 micrometers, and falls within the processable range of the liquid crystal cell thickness.

It can be learned that, in this application, the grating layer and the lens layer are combined, so that in the three-dimensional display mode, the grating layer with a large grating period can be used to act on the lens with a small aperture, to increase the action period of the lens. This increases the FOV and the display depth range of the naked-eye three-dimensional image.

(3.2) For example, the first light-transmitting component is the liquid crystal module in (1.2).

It can be learned from the foregoing analysis in (3.1) that P'≈P=ML. P'≈P=ML is substituted into $f=\frac{r}{n_e-n_o}\approx\frac{P}{2\tan(FOV/2)}$, to obtain $\frac{r}{n_e-n_o}\approx\frac{ML}{2\tan(FOV/2)}$.

In this application, because *r*>*L*/2, a minimum value of $\frac{r}{L/2}$ is 1. It can be learned from $\frac{r}{n_e-n_o}\approx\frac{ML}{2\tan(FOV/2)}$ that when $\frac{r}{L/2}$ is the minimum value 1, an FOV reaches a maximum value 2arctan $[M(n_e - n_o)]$.

It can be learned that the maximum value 2arctan$[M(n_e - n_o)]$ of the FOV in this application is not only limited by $n_e$ and $n_o$, but also limited by M. Therefore, in this application, the FOV of the naked-eye three-dimensional image may be increased by increasing M.

For example, it is assumed that in this application, a lens layer with a lens aperture of 0.3 millimeters and a grating layer with a grating period of 1.2 millimeters are used, and an opening width of the light-transmitting area in the grating layer is 0.2 millimeters, M is 4, and $n_e - n_o$ is 0.2. In this case, a liquid crystal cell thickness is approximately 150 micrometers, and a maximum FOV that can be implemented is about 77.31°. If the display apparatus in (1.2) uses a same action period as that in this application, a required liquid crystal cell thickness is at least 600 micrometers, and a maximum FOV that can be implemented is mainly limited by a refractive index difference of a liquid crystal material, and can only reach 22.61°. Therefore, in this application, a limitation of the display apparatus in (1.2) on the FOV is avoided, and a required liquid crystal cell thickness can be effectively reduced.

Still refer to FIG. 11. In the two electrode layers of each of the first light-transmitting component B1 and the second light-transmitting component B2, one electrode layer may be a common electrode layer, and the other electrode layer may be an array electrode layer. The array electrode layer includes a plurality of electrode strips arranged at intervals in parallel, and each lens may be driven by using two or more electrode strips. In FIG. 11, for example, a length direction of the electrode strip is perpendicular to a paper surface. The common electrode layer is a surface electrode, and an orthographic projection of each electrode strip on the display module 11 is located in an orthographic projection of the common electrode layer on the display module 11. The common electrode layer in the first light-transmitting component B1 and the common electrode layer in the second light-transmitting component B2 may be connected to a same voltage or different voltages. For example, both the two common electrode layers may be grounded.

The two electrode layers in each light-transmitting component may be arranged in the direction close to or away from the display module 11. A direction in which the electrode layers in each light-transmitting component are arranged is not limited in embodiments of this application. In FIG. 11, for example, a first electrode layer B101 that is in the first light-transmitting component B1 and that is close to the second light-transmitting component B2 and a second electrode layer B201 that is in the second light-transmitting component B2 and that is close to the first light-transmitting component B1 are common electrode layers. In this case, an electrode layer B101 that is in the first light-transmitting component B1 and that is away from the first light-transmitting component B2 is an array electrode layer, and an electrode layer B201 that is in the second light-transmitting component B2 and that is away from the first light-transmitting component B1 is also an array electrode layer.

When a common electrode layer in a light-transmitting component is placed at a position close to the other light-transmitting component, the common electrode layer can shield an electric field in the other light-transmitting component. This prevents the electric field in the other light-transmitting component from affecting an electrical control material layer in the light-transmitting component in which the common electrode layer is located, and improves stability of the light-transmitting module.

For example, in the first light-transmitting component B1, the first electrode layer B101 (array electrode layer) that is in the two first electrode layers B101 and that is away from the second light-transmitting component B2 includes a plurality of first electrode strips arranged at intervals, and the first electrode layer B102 (common electrode layer) that is in the two first electrode layers B101 and that is close to the second light-transmitting component B2 includes a first surface electrode. Orthographic projections of the plurality of first electrode strips on the display module 11 are all located in an orthographic projection of the first surface electrode on the display module 11.

In the second light-transmitting component B2, the second electrode layer B201 (array electrode layer) that is in the two second electrode layers B201 and that is away from the first light-transmitting component B1 includes a plurality of second electrode strips arranged at intervals, and the second electrode layer B201 (common electrode layer) that is in the two second electrode layers B201 and that is close to the first light-transmitting component B1 includes a second surface electrode. Orthographic projections of the plurality of second electrode strips on the display module 11 are all located in an orthographic projection of the second surface electrode on the display module 11.

It may be understood that the first electrode layer B101 that is in the first light-transmitting component B1 and that is close to the second light-transmitting component B2 may alternatively not be a common electrode layer, and/or the second electrode layer B201 that is in the second light-transmitting component B2 and that is close to the first light-transmitting component B1 may alternatively not be a common electrode layer.

Optionally, both the two first electrode layers B101 in the first light-transmitting component B1 may alternatively be common electrode layers. This is not limited in embodiments of this application.

Still refer to FIG. 11. The light-transmitting module 12 may further include a common substrate B3 located between the first light-transmitting component B1 and the second light-transmitting component B2. The common substrate B3 is light-transmitting and insulated. Orthographic projections of the first light-transmitting component B1 and the second light-transmitting component B2 on the display module 11 are both located in an orthographic projection of the common substrate B3 on the display module 11. The first light-transmitting component B1 and the second light-transmitting component B2 may share the common substrate B3, so that a plurality of substrates do not need to be disposed between the two light-transmitting components. This reduces a thickness of the light-transmitting module 12. It may be understood that the first light-transmitting component B1 and the second light-transmitting component B2 may alternatively not share the common substrate B3. In this case, the common substrate B3 needs to be replaced with two layers of substrates that one-to-one correspond to the two light-transmitting components B2.

Optionally, in this application, an example in which the light-transmitting module 11 is implemented by using the first light-transmitting component B1 and the second light-transmitting component B2 that are independent of each other is used. It may be understood that the light-transmitting module 11 may alternatively be implemented by using some structures that are not independent of each other. For example, the light-transmitting module 11 includes two third electrode layers and an electrically controlled material layer located between the two third electrode layers. The controller can control the electrically controlled material layer by applying a special electric field between the two third electrode layers, so that the grating layer and the lens layer are formed on the electrically controlled material layer, and the light-transmitting module is in the second light-transmitting state. In this case, the two third electrode layers and the electrically controlled material layer belong to a whole, but are not two light-transmitting components independent of each other.

The following further describes the display apparatus provided in this application by using an example in which the first light-transmitting component B1 may be the liquid crystal modules in the display apparatuses described in (1.1) and (1.2.1).

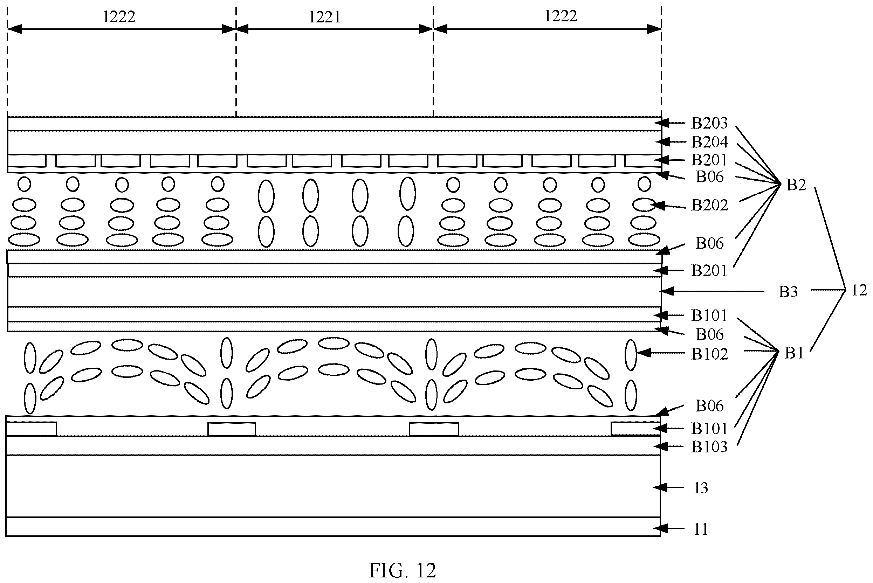

(4.1) For example, when the first light-transmitting component B1 is the liquid crystal module in the display apparatus described in (1.1), the display apparatus provided in embodiments of this application may be shown in FIG. 12. Based on FIG. 11, the electrical control material layer B02 is a liquid crystal layer; and in a light-transmitting module shown in FIG. 12, the first light-transmitting component B1 further includes a first substrate B103, the second light-transmitting component B2 further includes a second substrate B204, and each light-transmitting component further includes an alignment layer B06.

The first substrate B103 and the second substrate B204 are disposed opposite to each other, the common substrate B3 is located between the first substrate B103 and the second substrate B204, a part of the first light-transmitting component B1 other than the first substrate B103 is located between the first substrate B103 and the common substrate B3, and a part of the second light-transmitting component B2 other than the second substrate B204 is located between the second substrate B204 and the common substrate B3. The polarizer B203 in the second light-transmitting component B2 is located on a side that is of the second substrate B204 and that is away from the display module 11. There is an alignment layer B06 between each electrode layer and a liquid crystal layer (electrically controlled material layer) in each light-transmitting component.

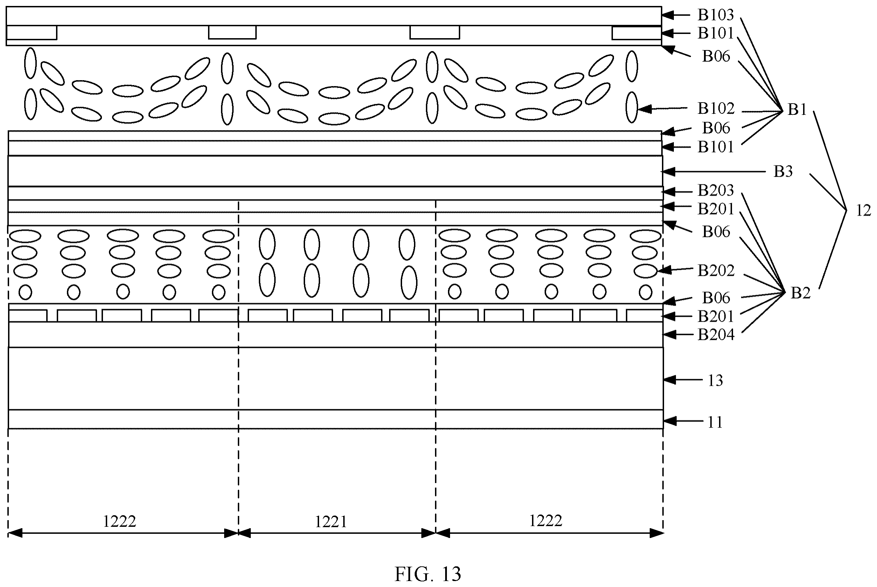

In FIG. 12, an arrangement of the first light-transmitting component B1 and the second light-transmitting component B2 is used as an example. When the second light-transmitting component B2 and the first light-transmitting component B1 are arranged, the display apparatus shown in FIG. 12 may be changed to a display apparatus shown in FIG. 13. In this case, the polarizer B203 in the second light-transmitting component B2 is located on a side that is of the common substrate B3 and that is away from the display module 11.

Refer to FIG. 12 or FIG. 13. It is assumed that a liquid crystal in the display apparatus is a TN-type liquid crystal.

In the first light-transmitting component B1, an alignment direction of an alignment layer B06 is parallel to a polarization direction of light emitted by the display module 11.

In the second light-transmitting component B2, an alignment direction of an alignment layer B06 close to the display module 11 is parallel to the polarization direction of the light emitted by the display module 11, and an alignment direction of an alignment layer B06 away from the display module 11 is perpendicular to the polarization direction of the light emitted by the display module 11.

In this way, if a polarization direction (the target direction) of the polarizer B203 in the second light-transmitting component B2 is perpendicular to the polarization direction of the light emitted by the display module 11, the second light-transmitting component B2 is in a normally white mode. In this case, an area in which a part to which an electric field is not applied and that is in the liquid crystal layer of the second light-transmitting component B2 is located is light-transmitting, and an area in which a part to which an electric field is applied and that is in the liquid crystal layer is not light-transmitting.

In addition, if the target direction is parallel to the polarization direction of the light emitted by the display module 11, the second light-transmitting component B2 is in a normally black mode. In this case, the area in which the part to which the electric field is applied and that is in the liquid crystal layer of the second light-transmitting component B2 is located is light-transmitting, and the area in which the part to which no electric field is applied and that is in the liquid crystal layer is not light-transmitting.

The display apparatuses shown in FIG. 12 and FIG. 13 are both in the three-dimensional display mode. In the three-dimensional display mode, the controller provides electrical signals for the electrode layers in the first light-transmitting component B1, so that liquid crystals in the liquid crystal layer in the first light-transmitting component B1 are deflected, to form a plurality of lenses. These lenses can split polarized light from the display module. In addition, in FIG. 12 and FIG. 13, an example in which the second light-transmitting component B2 is in the normally black mode is used. The controller may further determine, based on positions of a light-transmitting area 1221 and a light-shielding area 1222 in the grating layer that needs to be formed, to provide an electric field for a liquid crystal layer located in the light-transmitting area 1221 through the electrode layer, and not to provide an electric field for a liquid crystal layer located in the light-shielding area 1222. In states shown in FIG. 12 and FIG. 13, after the light of the second two-dimensional image emitted by the display module passes through the first light-transmitting component B1 and the second light-transmitting component B2, a naked-eye three-dimensional image can be displayed.

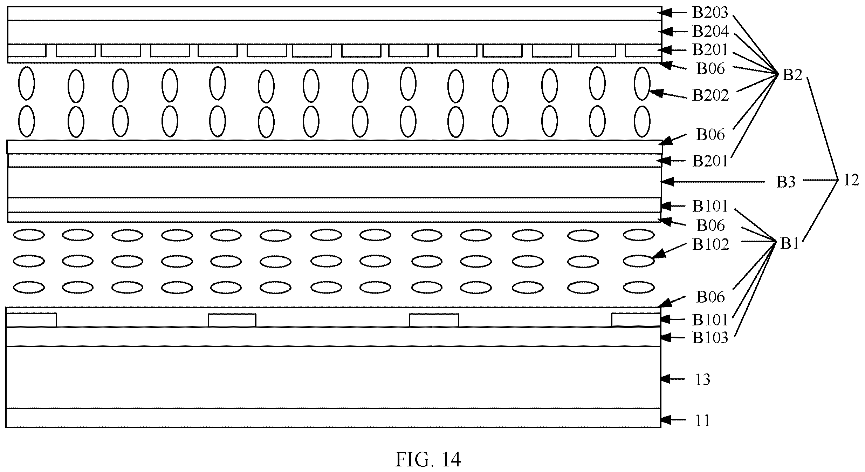

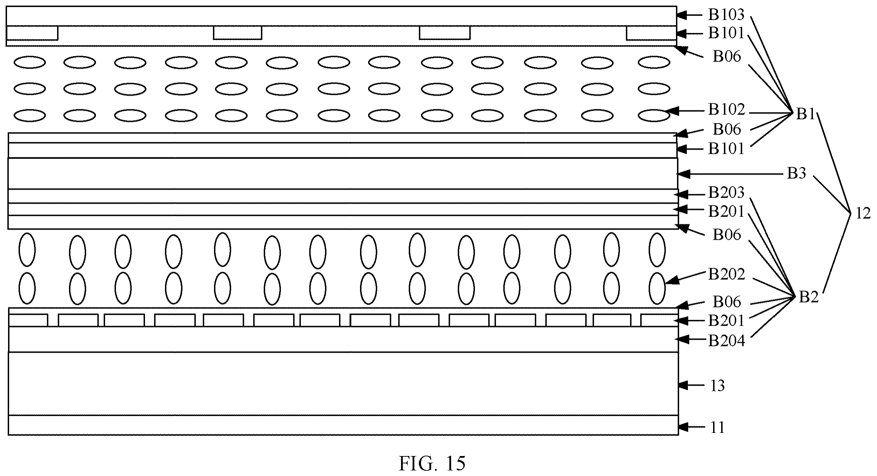

A state of the display apparatus shown in FIG. 12 in the two-dimensional display mode is shown in FIG. 14, and a state of the display apparatus shown in FIG. 13 in the two-dimensional display mode is shown in FIG. 15. With reference to FIG. 14 and FIG. 15, in the two-dimensional display mode, the controller does not provide electrical signals for the electrode layers in the first light-transmitting component B1. Therefore, liquid crystals in the liquid crystal layer in the first light-transmitting component B1 are evenly arranged in an original alignment direction, a refractive index of the liquid crystal layer is uniform, and the liquid crystal layer does not split the polarized light from the display module. In addition, in FIG. 14, an example in which the second light-transmitting component B2 is in the normally black mode is used. The controller may further provide an electrical signal for each electrode layer in the second light-transmitting component B2, so that all areas in the second light-transmitting component are light-transmitting. In states shown in FIG. 14 and FIG. 15, after the light of the first two-dimensional image emitted by the display module passes through the first light-transmitting component B1 and the second light-transmitting component B2, the first two-dimensional image can be displayed.

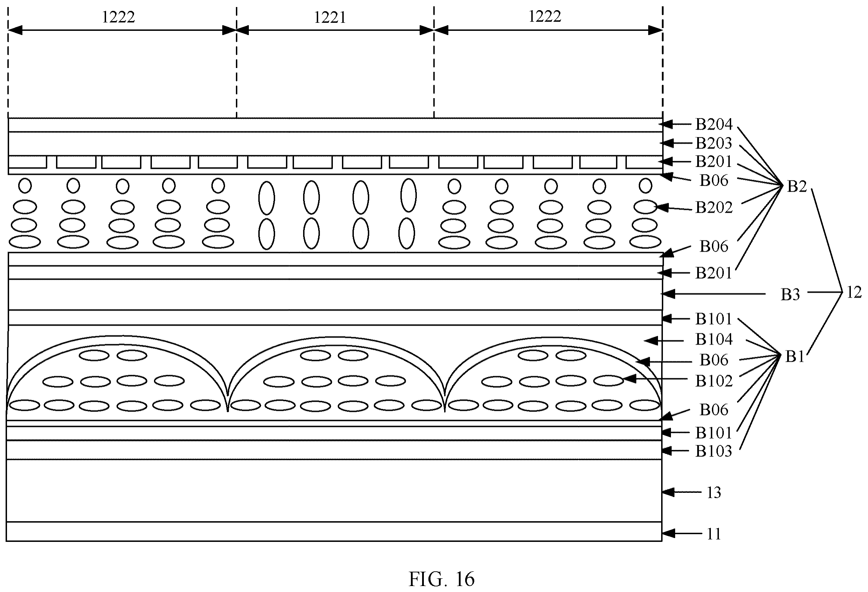

(4.2) For another example, when the first light-transmitting component B1 is the liquid crystal module in the display apparatus described in (1.2.1), the display apparatus provided in embodiments of this application may be shown in FIG. 16. Based on FIG. 12, the two first electrode layers in the first light-transmitting component B1 are both common electrode layers, and a shape of one alignment layer B06 in the first light-transmitting component B1 is the same as a shape of the curved layer in the display apparatus described in (1.2.1), and there is a filler B104 between the alignment layer B06 and a first electrode layer that is in the first light-transmitting component B1 and that is close to the alignment layer B06. For the filler B104, refer to descriptions of the filler in the display apparatus described in (1.2.1).

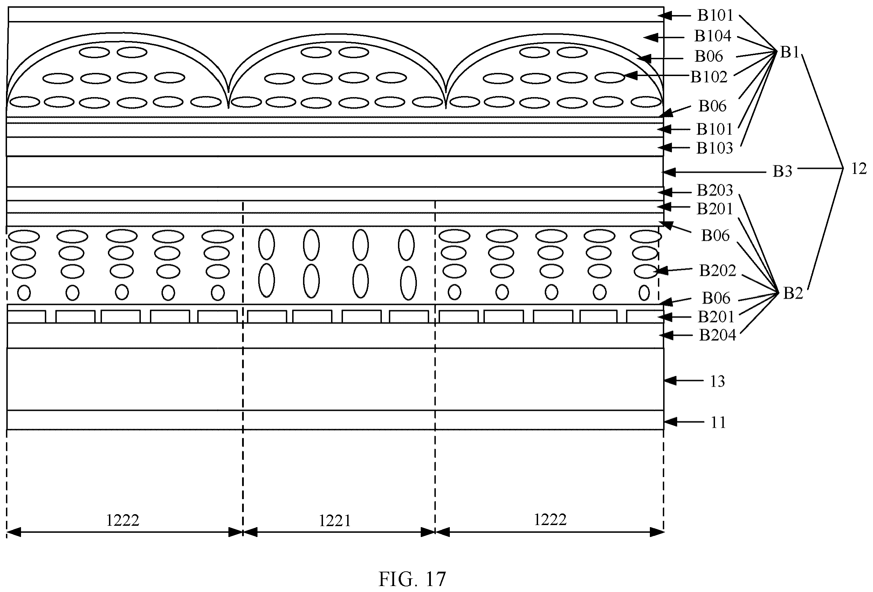

In FIG. 16, an arrangement of the first light-transmitting component B1 and the second light-transmitting component B2 is used as an example. When the second light-transmitting component B2 and the first light-transmitting component B1 are arranged, the display apparatus shown in FIG. 16 may be changed to a display apparatus shown in FIG. 17. In this case, the polarizer B203 in the second light-transmitting component B2 is located on a side that is of the common substrate B3 and that is away from the display module 11.

The display apparatuses shown in FIG. 16 and FIG. 17 are both in the three-dimensional display mode. In the three-dimensional display mode, the controller does not provide electrical signals for the electrode layers in the first light-transmitting component B1, a polarization direction of the polarized light from the display module is parallel to a major axis direction of a liquid crystal, and a lens layer that can split the polarized light is formed in the first light-transmitting component B1. In the three-dimensional display mode, for a control manner of the second light-transmitting component B2 in FIG. 16 and FIG. 17, refer to the control manner of the second light-transmitting component B2 in FIG. 12 and FIG. 13. In states shown in FIG. 16 and FIG. 17, after the light of the second two-dimensional image emitted by the display module passes through the first light-transmitting component B1 and the second light-transmitting component B2, the naked-eye three-dimensional image can be displayed.

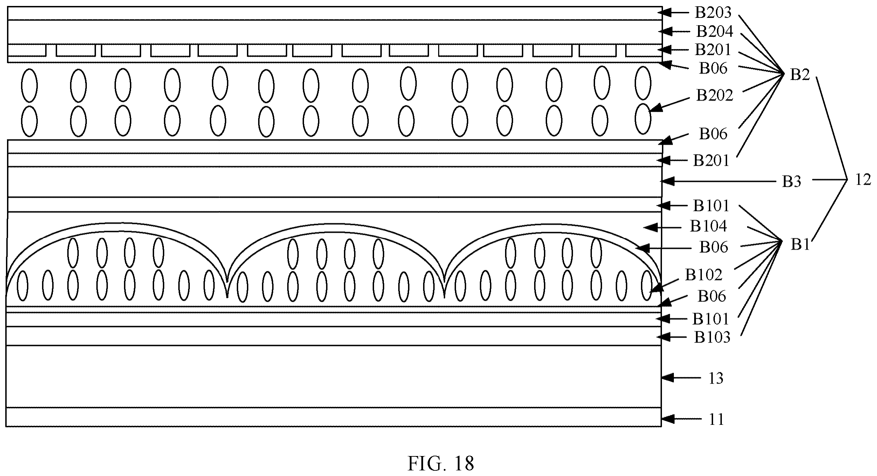

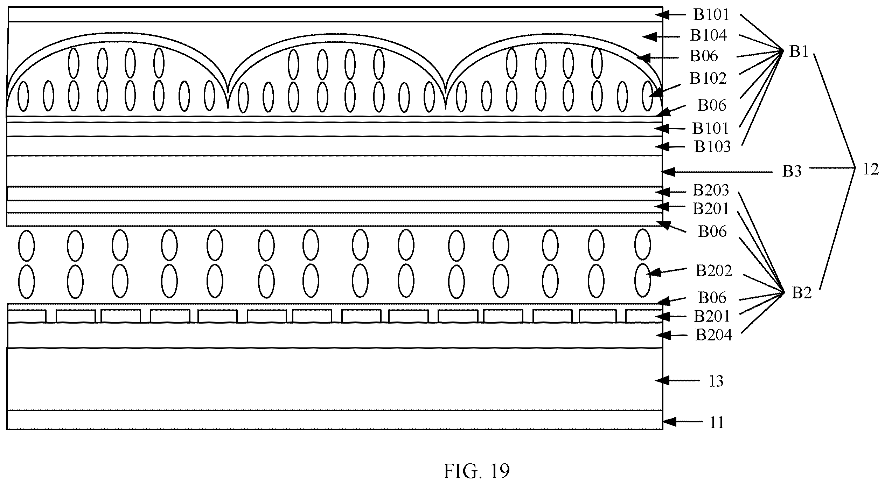

A state of the display apparatus shown in FIG. 16 in the two-dimensional display mode is shown in FIG. 18, and a state of the display apparatus shown in FIG. 17 in the two-dimensional display mode is shown in FIG. 19. With reference to FIG. 18 and FIG. 19, in the two-dimensional display mode, the controller provides electrical signals for the electrode layers in the first light-transmitting component B1, so that liquid crystals in the first light-transmitting component B1 are deflected. A polarization direction of the polarized light from the display module is parallel to a minor axis direction of the liquid crystal, and refractive indexes of the liquid crystal and the filler in the first light-transmitting component B1 for the polarized light are the same. Therefore, the first light-transmitting component B1 does not split the polarized light. In the two-dimensional display mode, for a control manner of the second light-transmitting component B2 in FIG. 16 and FIG. 17, refer to the control manner of the second light-transmitting component B2 in FIG. 14 and FIG. 15. In states shown in FIG. 18 and FIG. 19, after the light of the first two-dimensional image emitted by the display module 11 passes through the first light-transmitting component B1 and the second light-transmitting component B2, the first two-dimensional image can be displayed.

Further, when a focal length of a lens in the lens layer formed by the light-transmitting module 12 is large, the display apparatus provided in this application may further include a spacer layer (for example, a spacer layer 13 in FIG. 10 to FIG. 19), and the spacer layer is transparent and insulated. In addition, in this application, a thickness of the spacer layer may be further set based on a required focal length.

The accompanying drawings of this application schematically show a deflection direction of a liquid crystal and a polarization direction of the light displayed by the display module. It may be understood that these directions may be adjusted as required, and the controller may also correspondingly control the light-transmitting module based on these directions, to meet display requirements of the two-dimensional image and the naked-eye three-dimensional image. This is not limited in this application.

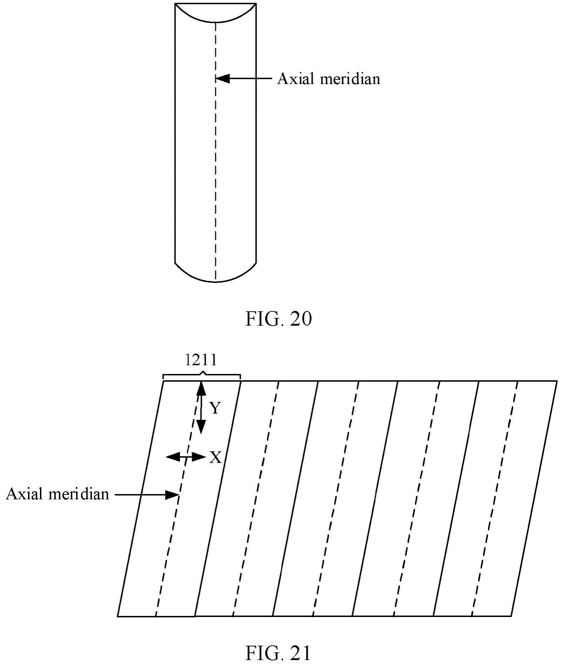

In this application, a lens in the lens layer formed by the light-transmitting module may be a cylindrical lens, and an axial meridian of the cylindrical lens may be perpendicular to a direction of a paper surface. For example, FIG. 20 is a diagram of a cylindrical lens according to an embodiment of this application. As shown in FIG. 20, an axial meridian of the cylindrical lens is parallel to a length direction (an up-down direction) of the cylindrical lens, and the axial meridian is located in a middle position of a curved surface of the cylindrical lens.

Correspondingly, a light-transmitting area in the grating layer formed by the light-transmitting module may also be in a strip shape, and an extension direction of the light-transmitting area may be parallel to the axial meridian of the lens. Alternatively, there may be an included angle between the extension direction of the light-transmitting area and the axial meridian of the lens.

Further, FIG. 21 is a top view of the lens layer 121 in the display apparatus shown in FIG. 10, and FIG. 21 shows only five lenses. As shown in FIG. 21, an axial meridian of a lens 1211 may be disposed obliquely relative to a row direction X and a column direction Y of a sub-pixel in the display module. In this case, both an included angle between the axial meridian of the lens 1211 and the row direction X and an included angle between the axial meridian of the lens 1211 and the column direction Y are greater than 0 degrees and less than 90 degrees. In other words, the axial meridian of the lens 1211 is not parallel to the row direction X, and is not parallel to the column direction Y.

Optionally, a display area of the display apparatus may be in a rectangle shape, and the row direction X or the column direction Y of the sub-pixel in the display module may be parallel to a width direction of the rectangle. When the axial meridian of the lens 1211 is disposed obliquely relative to the row direction X and the column direction Y, the axial meridian of the lens 1211 is also disposed obliquely relative to the width direction of the rectangle.

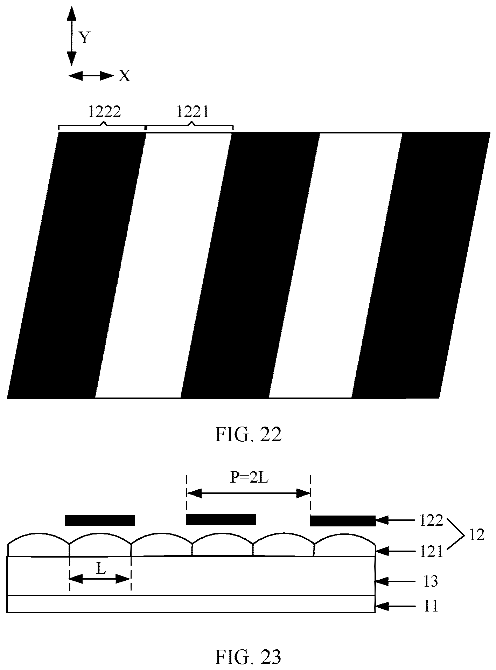

When the axial meridian of the lens 1211 may be disposed obliquely relative to the row direction and the column direction of the sub-pixel, extension directions of a light-transmitting area 1221 and a non-light-transmitting area 1222 in the grating layer 122 may also be disposed obliquely relative to both the row direction and the column direction. For example, FIG. 22 is a top view of the grating layer 122 in the display apparatus shown in FIG. 10. As shown in FIG. 22, an included angle between an extension direction of a light-transmitting area 1221 and the row direction X of the sub-pixel and an included angle between the extension direction of the light-transmitting area 1221 and the column direction Y of the sub-pixel are both greater than 0 degrees and less than 90 degrees, and the extension direction of the light-transmitting area 1221 is not parallel to the row direction X or the column direction Y.

When the display apparatus displays the naked-eye three-dimensional image, if the axial meridian of the lens 1211 is inclined to the row direction X and the column direction Y, resolution losses in the row direction X and the column direction Y that are introduced by the lens layer 121 and the grating layer 122 can be balanced. This prevents moire patterns, and improves display effect of naked-eye three-dimensional image. It may be understood that the axial meridian of the lens 1211 may alternatively be parallel to the row direction X or the column direction Y. This is not limited in embodiments of this application.

For example, when the light-transmitting module 12 includes the first light-transmitting component B1 and the second light-transmitting component B2 shown in FIG. 11, an extension direction of a light-transmitting area in the grating layer formed by the second light-transmitting component B2 may be controlled by designing a length direction of an electrode strip in the second light-transmitting component B2. When the first light-transmitting component B1 includes an electrode strip, an extension direction of an axial meridian of a lens formed by the first light-transmitting component B1 may be controlled by designing a length direction of the electrode strip; or when the first light-transmitting component B1 does not include an electrode strip, and the first light-transmitting component B1 includes a curved layer, an extension direction of an axial meridian of a lens formed by the first light-transmitting component B1 may be controlled by designing a shape of the curved layer.

For example, when the axial meridian of the lens 1211 is disposed obliquely relative to the row direction and the column direction of the sub-pixel, the electrode strip in the first light-transmitting component B1 may be disposed obliquely relative to both the row direction and the column direction. When the extension direction of the light-transmitting area 1221 in the grating layer 122 is disposed obliquely relative to the row direction and the column direction, the electrode strip in the second light-transmitting component B2 may be disposed obliquely relative to both the row direction and the column direction.

In the display apparatus provided in this application, the controller controls, in the three-dimensional display mode, the grating layer to be formed on the light-transmitting module. When the grating period of the grating layer is M times the aperture of the lens in the lens layer, and the plurality of light-transmitting areas in the grating layer correspond to a part of lenses in the lens layer, the light-transmitting module supports a plurality of candidate periods, and the controller can control a grating layer having any one of the plurality of candidate periods to be formed on the light-transmitting module. Therefore, the grating period of the grating layer formed by the light-transmitting module controlled by the controller in the three-dimensional display mode may be any one of the plurality of candidate periods. Optionally, the controller may select any period from the plurality of candidate periods as the grating period of the grating layer according to an instruction, or the controller may determine, from the plurality of candidate periods by using a specific algorithm, a grating period required by the grating layer. For example, the controller may determine, based on a quantity of viewers in front of the display apparatus, the grating period required by the grating layer. The quantity of viewers may be a quantity received by the controller, or may be obtained by the controller by recognizing images of viewers in front of the display apparatus.

The grating period of the grating layer is switchable between the plurality of candidate periods. It may be understood that the grating period of the grating layer may alternatively be fixed. This is not limited in embodiments of this application.

The plurality of candidate periods are all greater than the aperture of the lens, and are all integer multiples of the aperture of the lens. In this way, when the grating period of the grating layer formed by the light-transmitting module varies among different candidate periods, a value of M changes accordingly. In addition, it can be learned from the foregoing analysis in (3.1) and (3.2) that the FOV of the naked-eye three-dimensional image is positively correlated with M. Therefore, the controller may switch the grating period of the grating layer between the plurality of candidate periods, to adjust the FOV of the naked-eye three-dimensional image.

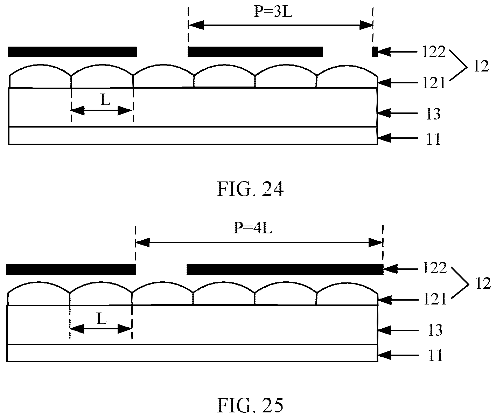

For example, as shown in FIG. 23, FIG. 24, and FIG. 25, when M=2, 3, and 4, grating periods of the grating layer are respectively 2L, 3L, and 4L. In the three cases, FOVs of the naked-eye three-dimensional image displayed by the display apparatus are different. In addition, when M=4, the FOV of the naked-eye three-dimensional image displayed by the display apparatus is the largest, and when M=2, the FOV of the naked-eye three-dimensional image displayed by the display apparatus is the smallest.

For another example, for the display apparatus shown in FIG. 12, it is assumed that an aperture of the lens formed in the liquid crystal layer in the first light-transmitting component B1 is 0.3 millimeters, and an opening width of the light-transmitting area 1221 (a length of 1221 in a left-right direction) in the grating layer formed by the liquid crystal in the second light-transmitting component B2 is 0.2 millimeters. When M is respectively set to 1, 2, 3, 4, and 5, corresponding grating periods are respectively 0.3 millimeters, 0.6 millimeters, 0.9 millimeters, 1.2 millimeters, and 1.5 millimeters. In these cases, FOVs of the naked-eye three-dimensional image displayed by the display apparatus are respectively 28.07°, 53.13°, 73.74°, 90°, and 102.68°.

In addition, in a process in which the controller adjusts the FOV by adjusting the grating period of the grating layer, because a pixel optical path within an aperture range of an effective lens in the lens layer does not change, and the pixel optical path within the aperture range of the effective lens corresponds to a central area of a viewing area, inter-pixel crosstalk of the central area of the viewing area is small. Therefore, it can be ensured that a display depth range of the central viewing area of the display apparatus approximately remains unchanged.

Optionally, in the three-dimensional display mode, the display apparatus is configured to sequentially display a plurality of frames of target naked-eye three-dimensional images. A display time period of each frame of target naked-eye three-dimensional image is less than 33.3 milliseconds. For example, the display time period is 16.7 milliseconds.

In a display time period of one frame of target naked-eye three-dimensional image, the controller may control, based on a two-dimensional image corresponding to the target naked-eye three-dimensional image, the display module to sequentially display a plurality of frames of second two-dimensional images, and when the display module displays one frame of second two-dimensional image in the plurality of frames of second two-dimensional images, the controller controls the light-transmitting module to be in a second light-transmitting state corresponding to the frame of second two-dimensional image.

The plurality of frames of second two-dimensional images are all images obtained by the controller by rearranging pixels in the two-dimensional image corresponding to the target naked-eye three-dimensional image. The controller may rearrange, based on a second light-transmitting state corresponding to each frame of second two-dimensional image and a position of a viewpoint of the display apparatus, the pixels in the two-dimensional image corresponding to the target naked-eye three-dimensional image, to obtain the frame of second two-dimensional image.

In second light-transmitting states corresponding to different frames of second two-dimensional images, the lens layer formed by the light-transmitting module remains unchanged, the grating period of the grating layer formed by the light-transmitting module remains unchanged, and positions of the light-transmitting areas in the grating layer vary. For example, in second light-transmitting states corresponding to any two adjacent frames of the plurality of frames of second two-dimensional images, lenses corresponding to a same light-transmitting area are adjacent. It may be understood that the lenses corresponding to the same light-transmitting area may not be adjacent to each other. This is not limited in this application.

In the display time period of the one frame of target naked-eye three-dimensional image, if the display module sequentially displays the plurality of frames of second two-dimensional images, and when the display module displays the one frame of second two-dimensional image in the plurality of frames of second two-dimensional images, the light-transmitting module is in the second light-transmitting state corresponding to the frame of second two-dimensional image. In this case, the display apparatus sequentially displays a plurality of frames of auxiliary naked-eye three-dimensional images that one-to-one correspond to the plurality of frames of second two-dimensional images. The display time period of the one frame of target naked-eye three-dimensional image is less than 33.3 milliseconds (for example, the display time period is 16.7 milliseconds). It can be learned that the display time period is 0.1 seconds to 0.4 seconds shorter than visual persistence duration of human eyes. Therefore, after the plurality of frames of auxiliary naked-eye three-dimensional images enter the human eyes, the human eyes can see the target naked-eye three-dimensional image formed by different frames of auxiliary naked-eye three-dimensional images, so that the target naked-eye three-dimensional image is displayed.

Because in the second light-transmitting states corresponding to different frames of second two-dimensional images, the positions of the light-transmitting areas in the grating layer formed by the light-transmitting module vary, the viewer can see, at a same viewpoint, light emitted by different pixels in the display module. This increases a quantity of pixels seen by the viewer at the viewpoint, and increases resolution of the target frame of naked-eye three-dimensional image seen by the human eyes. In addition, in this case, blocking effect of the grating layer is significantly reduced, and brightness uniformity of the target naked-eye three-dimensional image is improved.

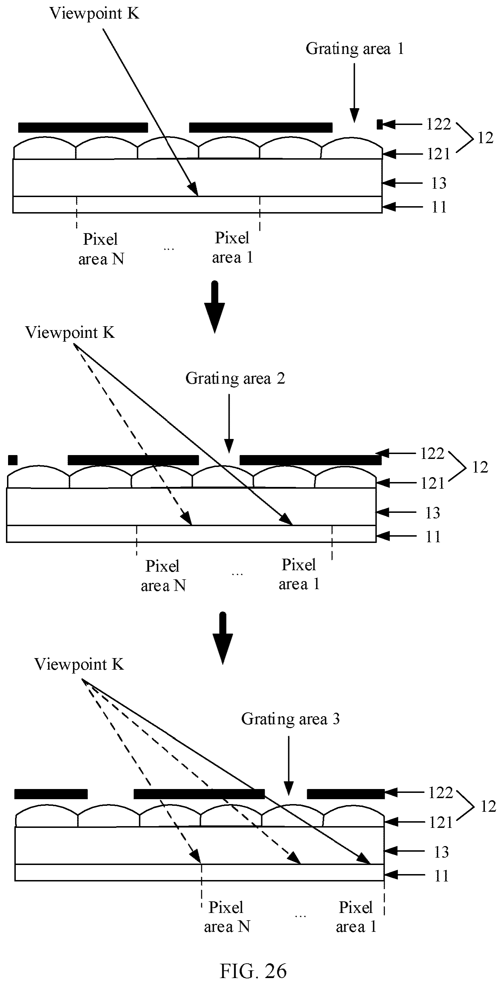

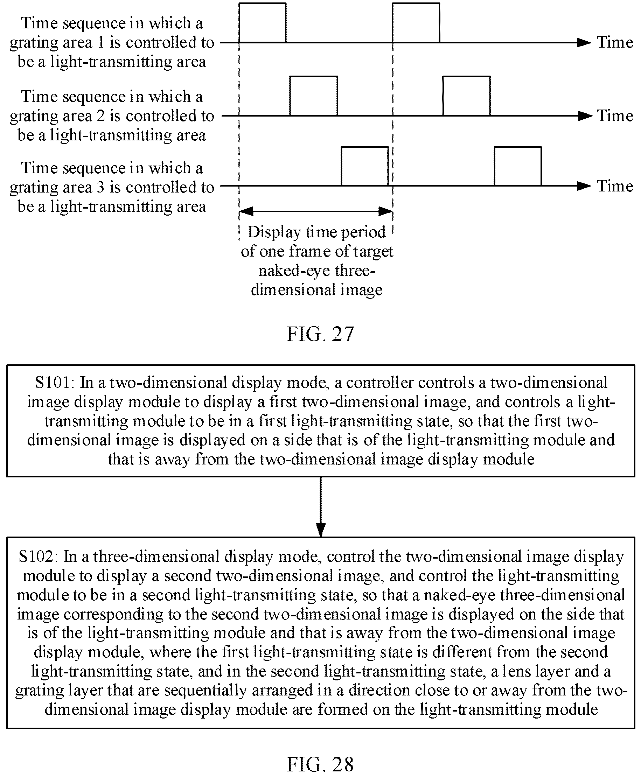

For example, the grating period is three times the aperture of the lens. As shown in FIG. 26, in this case, each grating period of the grating layer 122 may be divided into grating areas 1, 2, and 3. In the display time period of the one frame of target naked-eye three-dimensional image, the controller may control the grating areas 1, 2, and 3 to be sequentially light-transmitting areas, so that the light-transmitting module 12 is sequentially in three second light-transmitting states. A time sequence in which the controller separately controls the grating areas 1, 2, and 3 as the light-transmitting areas may be shown in FIG. 27. In each second light-transmitting state in the three second light-transmitting states, the controller may further control the display module 11 to display one frame of second two-dimensional image corresponding to the second light-transmitting state.

It is assumed that a pixel area corresponding to a viewpoint on the display module 11 is a pixel area seen by the viewer at the viewpoint from the display module 11. Pixel areas corresponding to a viewpoint 1 to a viewpoint N on the display module 11 are respectively a pixel area 1 to a pixel area N in FIG. 26. In this case, it can be learned from FIG. 26 that, in different second light-transmitting states, the pixel area 1 to the pixel area N change. In FIG. 26, an example in which a whole including the pixel area 1 to the pixel area N gradually moves rightward is used.

Based on a function of visual persistence, in a display time period of the target naked-eye three-dimensional image, a quantity of pixels seen by the viewer at a same viewpoint increases by three times. For example, based on the function of visual persistence, in the display time period, the viewer can see pixels in three pixel areas at a viewpoint K ($1<K<N$) in FIG. 26. In this way, resolution of the target naked-eye three-dimensional image is increased by three times.

It can be learned from the foregoing content that, in this application, resolution of the target naked-eye three-dimensional image may be increased in a time division multiplexing manner. In addition, it is assumed that the light-transmitting module 12 and the grating layer 122 formed by the display module 11 in FIG. 26 can reach a refresh rate of 180 Hz. In this case, a refresh rate of the target naked-eye three-dimensional image can reach 60 Hz, and the display time period of the one frame of target naked-eye three-dimensional image may be 16.7 milliseconds.

In conclusion, in the display apparatus provided in embodiments of this application, the controller may control the display module to display different two-dimensional images, and control the light-transmitting module to be in different light-transmitting states, so that the display apparatus displays the two-dimensional image or the naked-eye three-dimensional image. In this way, the display apparatus can not only display the two-dimensional image, but also display the naked-eye three-dimensional image. Therefore, functions of the display apparatus are enriched.

In the three-dimensional display mode, the controller controls the lens layer and the grating layer to be formed on the light-transmitting module, and the lens layer can split light. In addition, under an action of the light-transmitting area in the grating layer, an action area of the lens in the lens layer on the display module can be increased, and an action period of the lens can be increased to M times the aperture of the lens. When a focal length of the lens remains unchanged, because the FOV of the naked-eye three-dimensional image is positively correlated with the action period of the lens, the FOV of the naked-eye three-dimensional image displayed by the display apparatus can also be improved.

In addition, because the action period of the lens is also positively correlated with the display depth range of the naked-eye three-dimensional image, the display depth range of the naked-eye three-dimensional image displayed by the display apparatus can also be improved.

A structure of the display apparatus provided in embodiments of this application is simple, control difficulty is low, and the display apparatus has low requirements on a process and a material.

The display apparatus provided in embodiments of this application may be of a dual-viewpoint display type and an ultra-multi-viewpoint display type. The display apparatus may be an apparatus that can display an image, such as a mobile phone (for example, a smartphone), a desktop display, a tablet computer, a television, a vehicle-mounted display, a smartwatch, or e-paper. A display area of the display apparatus may be of any size, for example, 3 inches to 110 inches.

Based on the display apparatus provided in this application, an embodiment of this application further provides a display control method performed by the controller in the display apparatus. For example, as shown in FIG. 28, the display control method may include the following steps:

S101: In a two-dimensional display mode, the controller controls a display module to display a first two-dimensional image, and controls a light-transmitting module to be in a first light-transmitting state, so that the first two-dimensional image is displayed on a side that is of the light-transmitting module and that is away from the display module.

S102: In a three-dimensional display mode, control the display module to display a second two-dimensional image, and control the light-transmitting module to be in a second light-transmitting state, so that a naked-eye three-dimensional image corresponding to the second two-dimensional image is displayed on the side that is of the light-transmitting module and that is away from the display module, where the first light-transmitting state is different from the second light-transmitting state, and in the second light-transmitting state, a lens layer and a grating layer that are arranged in a direction close to or away from the display module are formed on the light-transmitting module.

In this embodiment of this application, an example in which S101 is performed before S102 is used. Optionally, the controller may alternatively perform S102 before S101.

Optionally, when a grating period of the grating layer is M times an aperture of a lens in the lens layer, and a plurality of light-transmitting areas in the grating layer correspond to a part of lenses in the lens layer, the light-transmitting module may support a plurality of candidate periods, and the controller can control a grating layer having any one of the plurality of candidate periods to be formed on the light-transmitting module. In this case, after S102, the display control method further includes: in the three-dimensional display mode, controlling the grating period of the grating layer to be switched between the plurality of candidate periods, to adjust an FOV of the naked-eye three-dimensional image.

Optionally, in the three-dimensional display mode, the display apparatus is configured to sequentially display a plurality of frames of target naked-eye three-dimensional images. A display time period of each frame of target naked-eye three-dimensional image is less than 33.3 milliseconds. When the grating period of the grating layer is M times the aperture of the lens in the lens layer, and the plurality of light-transmitting areas in the grating layer correspond to the part of lenses in the lens layer, in a display time period of one frame of target naked-eye three-dimensional image, the controller may control, in S102, based on a two-dimensional image corresponding to the target naked-eye three-dimensional image, the display module to sequentially display a plurality of frames of second two-dimensional images. When the display module displays one frame of second two-dimensional image in the plurality of frames of second two-dimensional images, the controller may further control the light-transmitting module to be in a second light-transmitting state corresponding to the one frame of second two-dimensional image, so that a plurality of frames of auxiliary naked-eye three-dimensional images that one-to-one correspond to the plurality of frames of second two-dimensional images are sequentially displayed on the side that is of the light-transmitting module and that is away from the display module. In second light-transmitting states corresponding to different frames of second two-dimensional images, the lens layer remains unchanged, the grating period of the grating layer remains unchanged, and positions of the light-transmitting areas in the grating layer vary. Because the display time period is less than visual persistence duration of human eyes, the human eyes cannot distinguish between different frames of auxiliary naked-eye three-dimensional images. After the plurality of frames of auxiliary naked-eye three-dimensional images enter the human eyes, the human eyes can see the target naked-eye three-dimensional image, so that the target naked-eye three-dimensional image is displayed.

For example, in second light-transmitting states corresponding to any two adjacent frames of the plurality of frames of second two-dimensional images, lenses corresponding to a same light-transmitting area are adjacent. It may be understood that the lenses corresponding to the same light-transmitting area may not be adjacent to each other. This is not limited in this application.

For the display control method provided in this embodiment of this application, refer to functions of the controller in the display apparatus provided in this application. Details are not described herein in this embodiment of this application.

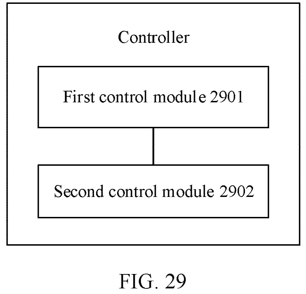

Based on the display control method provided in this embodiment of this application, an embodiment of this application provides a controller. The controller may be the controller in the display apparatus provided in embodiments of this application, and the controller is configured to perform the display control method provided in embodiments of this application. For example, as shown in FIG. 29, the controller includes:

a first control module 2901, configured to: in a two-dimensional display mode, control a display module to display a first two-dimensional image, and control a light-transmitting module to be in a first light-transmitting state, so that the first two-dimensional image is displayed on a side that is of the light-transmitting module and that is away from the display module; and

a second control module 2902, configured to: in a three-dimensional display mode, control the display module to display a second two-dimensional image, and control the light-transmitting module to be in a second light-transmitting state, so that a naked-eye three-dimensional image corresponding to the second two-dimensional image is displayed on the side that is of the light-transmitting module and that is away from the display module.

The first light-transmitting state is different from the second light-transmitting state. In the second light-transmitting state, a lens layer and a grating layer that are arranged in a direction close to or away from the display module are formed on the light-transmitting module.

Optionally, when a grating period of the grating layer is M times an aperture of a lens in the lens layer, and a plurality of light-transmitting areas in the grating layer correspond to a part of lenses in the lens layer, the light-transmitting module supports a plurality of candidate periods, and the controller can control a grating layer having any one of the plurality of candidate periods to be formed on the light-transmitting module. In this case, the controller further includes a third control module (not shown in FIG. 29), configured to control, in the three-dimensional display mode, the grating period of the grating layer to be switched between the plurality of candidate periods, to adjust an FOV of the naked-eye three-dimensional image.

Optionally, in the three-dimensional display mode, the display apparatus is configured to sequentially display a plurality of frames of target naked-eye three-dimensional images. A display time period of each frame of target naked-eye three-dimensional image is less than 33.3 milliseconds. When the grating period of the grating layer is M times the aperture of the lens in the lens layer, and the plurality of light-transmitting areas in the grating layer correspond to the part of lenses in the lens layer, in a display time period of one frame of target naked-eye three-dimensional image, the second control module 2902 in the controller may control, based on a two-dimensional image corresponding to the target naked-eye three-dimensional image, the display module to sequentially display a plurality of frames of second two-dimensional images. When the display module displays one frame of second two-dimensional image in the plurality of frames of second two-dimensional images, the controller may further control the light-transmitting module to be in a second light-transmitting state corresponding to the one frame of second two-dimensional image, so that a plurality of frames of auxiliary naked-eye three-dimensional images that one-to-one correspond to the plurality of frames of second two-dimensional images are sequentially displayed on the side that is of the light-transmitting module and that is away from the display module. In second light-transmitting states corresponding to different frames of second two-dimensional images, the lens layer remains unchanged, the grating period of the grating layer remains unchanged, and positions of the light-transmitting areas in the grating layer vary. Because the display time period is less than visual persistence duration of human eyes, the human eyes cannot distinguish between different frames of auxiliary naked-eye three-dimensional images. After the plurality of frames of auxiliary naked-eye three-dimensional images enter the human eyes, the human eyes can see the target naked-eye three-dimensional image, so that the target naked-eye three-dimensional image is displayed.

For example, in second light-transmitting states corresponding to any two adjacent frames of the plurality of frames of second two-dimensional images, lenses corresponding to a same light-transmitting area are adjacent. It may be understood that the lenses corresponding to the same light-transmitting area may not be adjacent to each other. This is not limited in this application.

An embodiment of this application further provides a chip. The chip includes a programmable logic circuit and/or program instructions. When the chip runs, the chip is configured to implement any display control method performed by a controller provided in this application.

An embodiment of this application further provides a computer-readable storage medium. The computer-readable storage medium stores instructions. When the instructions are run on a computer, the computer is enabled to perform any display control method performed by a controller provided in this application.

An embodiment of this application further provides a computer program product including instructions. When the computer program product is run on a computer, the computer is enabled to perform any display control method performed by a controller provided in this application.

All or some of controllers provided in embodiments of this application may be implemented by using software, hardware, firmware, or any combination thereof. When the controllers are implemented by using software, all or some of the controllers may be implemented in a form of a computer program product. The computer program product includes one or more computer instructions. When the computer program instructions are loaded and executed on a computer, procedures or functions according to embodiments of this application are all or partially generated. The computer may be a general-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

It should be noted that all images in this application are authorized by a user or fully authorized by all parties, and harmonious image needs to comply with related laws, regulations, and standards of related countries and regions.

In this application, the terms "first", "second", and the like are merely intended for description, but cannot be understood as an indication or implication of relative importance. The term "at least one" means one or more, and the term "a plurality of" means two or more, unless otherwise expressly limited. The term "and/or" describes only an association relationship for describing associated objects and represents that three relationships may exist. For example, A and/or B may represent the following three cases: Only A exists, both A and B exist, and only B exists.

Different types of embodiments such as the display apparatus embodiment, the display control method embodiment, and the controller embodiment provided in embodiments of this application may be mutually referenced. This is not limited in embodiments of this application.

In the corresponding embodiments provided in this application, it should be understood that the disclosed display apparatus, the controller, and the like may be implemented in other composition manners. For example, the described embodiments are merely examples. For example, division into the modules is merely logical function division, and may be other division in actual implementation. For example, a plurality of modules may be combined or integrated into another system, or some features may be ignored or not performed.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

**1.** A display apparatus, comprising a controller, a display module (11), and a light-transmitting module (12) located on a display side of the display module (11), wherein the controller is configured to:

in a two-dimensional display mode, control the display module (11) to display a first two-dimensional image, and control the light-transmitting module (12) to be in a first light-transmitting state, so that the first two-dimensional image is displayed on a side that is of the light-transmitting module (12) and that is away from the display module (11); and

in a three-dimensional display mode, control the display module (11) to display a second two-dimensional image, and control the light-transmitting module (12) to be in a second light-transmitting state, so that a naked-eye three-dimensional image corresponding to the second two-dimensional image is displayed on the side that is of the light-transmitting module (12) and that is away from the display module (12), wherein

the first light-transmitting state is different from the second light-transmitting state, and in the second light-transmitting state, a lens layer (121) and a grating layer (122) that are arranged in a direction close to or away from the display module are formed on the light-transmitting module (12).

**2.** The display apparatus according to claim 1, wherein the light-transmitting module (12) comprises a first light-transmitting component (B1) and a second light-transmitting component (B2) that are arranged in the direction close to or away from the display module; and

in the second light-transmitting state, the lens layer (121) is formed on the first light-transmitting component (B1), and the grating layer (122) is formed on the second light-transmitting component (B2).

3. The display apparatus according to claim 2, wherein the first light-transmitting component (B1) comprises two first electrode layers (B101) and a first electrically controlled material layer (B102) located between the two first electrode layers (B101); and
the controller is configured to control, through the two first electrode layers (B101), the lens layer (121) to be formed on the first electrically controlled material layer (B102).

4. The display apparatus according to claim 3, wherein a first electrode layer (B101) that is in the two first electrode layers (B101) and that is away from the second light-transmitting component (B2) comprises a plurality of first electrode strips (B1011) arranged at intervals;

a first electrode layer (B101) that is in the two first electrode layers (B101) and that is close to the second light-transmitting component (B2) comprises a first surface electrode (B1012); and
orthographic projections of the plurality of first electrode strips (B1011) on the display module (11) are all located in an orthographic projection of the first surface electrode (B1012) on the display module (11).

5. The display apparatus according to any one of claims 2 to 4, wherein the second light-transmitting component (B2) comprises two second electrode layers (B201), a second electrically controlled material layer (B202) located between the two second electrode layers (B201), and a polarizer (B203) located on a side that is of the two second electrode layers (B202) and that is away from the display module (11); and
the controller is configured to control the second electrically controlled material layer (B202) through the two second electrode layers (B201), so that the grating layer (122) is formed on the second electrically controlled material layer (B202) and the polarizer (B203).

6. The display apparatus according to claim 5, wherein a second electrode layer (B102) that is in the two second electrode layers (B102) and that is away from the first light-transmitting component (B1) comprises a plurality of second electrode strips (B1021) arranged at intervals;

a second electrode layer (B102) that is in the two second electrode layers (B102) and that is close to the first light-transmitting component (B1) comprises a second surface electrode (B1022); and
orthographic projections of the plurality of second electrode strips (B1021) on the display module (11) are all located in an orthographic projection of the second surface electrode (B1022) on the display module (11).

7. The display apparatus according to any one of claims 2 to 6, wherein the light-transmitting module (12) further comprises a light-transmitting and insulated common substrate (B3); and
the common substrate (B3) is located between the first light-transmitting component (B1) and the second light-transmitting component (B2), and orthographic projections of the first light-transmitting component (B1) and the second light-transmitting component (B2) on the display module (11) are both located in an orthographic projection of the common substrate (B3) on the display module (11).

8. The display apparatus according to any one of claims 1 to 7, wherein a lens (1211) in the lens layer (121) is a cylindrical lens, the grating layer (122) comprises a plurality of strip-shaped light-transmitting areas (1221), and an extension direction of the light-transmitting area (1221) is parallel to an axial meridian of the lens (1211).

9. The display apparatus according to any one of claims 1 to 8, wherein the display module (11) comprises a plurality of sub-pixels arranged in an array; and
the lens (1211) in the lens layer (121) is the cylindrical lens, and both an included angle between the axial meridian of the lens (1211) and a row direction (X) of the sub-pixels and an included angle between the axial meridian of the lens (1211) and a column direction (Y) of the sub-pixels are greater than 0 degrees and less than 90 degrees.

10. The display apparatus according to any one of claims 1 to 9, wherein adjacent lenses (1211) in the lens layer (121) are connected to each other.

11. The display apparatus according to any one of claims 1 to 10, wherein a grating period (P) of the grating layer (122) is M times an aperture (L) of the lens (1211) in the lens layer (121), and M is an integer greater than 1.

12. The display apparatus according to claim 11, wherein the grating layer (122) comprises a plurality of light-transmitting areas (1221) arranged at intervals;

an orthographic projection of one of the light-transmitting areas (1221) on the display module (11) is located in an orthographic projection, on the display module (11), of a lens (1211) that corresponds to the light-transmitting area (1221) and that is in the lens layer (121); and
different light-transmitting areas (1221) correspond to different lenses (1211) in the lens layer (121), and the plurality of light-transmitting areas (1221) correspond to a part of lenses (1211) in the lens layer (121).

**13.** The display apparatus according to claim 12, wherein the grating period (P) of the grating layer (122) is switchable between a plurality of candidate periods.

**14.** The display apparatus according to claim 12 or 13, wherein the controller is configured to:

in the three-dimensional display mode, in a display time period of one frame of target naked-eye three-dimensional image, control, based on a two-dimensional image corresponding to the target naked-eye three-dimensional image, the display module (11) to sequentially display a plurality of frames of second two-dimensional images, and when the display module (11) displays one frame of second two-dimensional image in the plurality of frames of second two-dimensional images, control the light-transmitting module (12) to be in a second light-transmitting state corresponding to the one frame of second two-dimensional image, so that a plurality of frames of auxiliary naked-eye three-dimensional images that one-to-one correspond to the plurality of frames of second two-dimensional images are sequentially displayed on the side that is of the light-transmitting module (12) and that is away from the display module (11), wherein
the display time period is less than 33.3 milliseconds; and in second light-transmitting states corresponding to different frames of second two-dimensional images, the lens layer (121) remains unchanged, the grating period (P) of the grating layer (122) remains unchanged, and positions of the light-transmitting areas (1221) in the grating layer (122) vary.

**15.** The display apparatus according to claim 14, wherein in second light-transmitting states corresponding to any two adjacent frames of the plurality of frames of second two-dimensional images, lenses (1211) corresponding to a same light-transmitting area (1221) are adjacent to each other.

**16.** A display control method, wherein the method is performed by a controller in the display apparatus according to any one of claims 1 to 15, and the method comprises:

in a two-dimensional display mode, controlling the display module to display a first two-dimensional image, and controlling the light-transmitting module to be in a first light-transmitting state, so that the first two-dimensional image is displayed on a side that is of the light-transmitting module and that is away from the display module; and
in a three-dimensional display mode, controlling the display module to display a second two-dimensional image, and controlling the light-transmitting module to be in a second light-transmitting state, so that a naked-eye three-dimensional image corresponding to the second two-dimensional image is displayed on the side that is of the light-transmitting module and that is away from the display module, wherein
the first light-transmitting state is different from the second light-transmitting state, and in the second light-transmitting state, a lens layer and a grating layer that are arranged in a direction close to or away from the display module are formed on the light-transmitting module.

**17.** The method according to claim 16, wherein a grating period of the grating layer is M times an aperture of a lens in the lens layer, and M is an integer greater than 1; the grating layer comprises a plurality of light-transmitting areas arranged at intervals; an orthographic projection of one of the light-transmitting areas on the display module is located in an orthographic projection, on the display module, of a lens that corresponds to the light-transmitting area and that is in the lens layer; different light-transmitting areas correspond to different lenses in the lens layer, and the plurality of light-transmitting areas correspond to a part of lenses in the lens layer; and the method further comprises:
in the three-dimensional display mode, controlling the grating period of the grating layer to be switched between a plurality of candidate periods.

**18.** The method according to claim 16 or 17, wherein the grating period of the grating layer is M times the aperture of the lens in the lens layer, and M is an integer greater than 1; the grating layer comprises the plurality of light-transmitting areas arranged at intervals; the orthographic projection of the one light-transmitting area on the display module is located in the orthographic projection, on the display module, of the lens that corresponds to the light-transmitting area and that is in the lens layer; the different light-transmitting areas correspond to the different lenses in the lens layer, and the plurality of light-transmitting areas correspond to the part of lenses in the lens layer; and controlling the display module to display the second two-dimensional image, and controlling the light-transmitting module to be in the second light-transmitting state comprise:

in a display time period of one frame of target naked-eye three-dimensional image, controlling, based on a two-dimensional image corresponding to the target naked-eye three-dimensional image, the display module to sequentially display a plurality of frames of second two-dimensional images, and when the display module displays one frame of second two-dimensional image in the plurality of frames of second two-dimensional images, controlling the light-transmitting module to be in a second light-transmitting state corresponding to the one frame of second two-dimensional image, so that a plurality of frames of auxiliary naked-eye three-dimensional images that one-to-one correspond to the plurality of frames of second two-dimensional images are sequentially displayed on the side that is of the light-transmitting module and that is away from the display module, wherein
the display time period is less than 33.3 milliseconds; and in second light-transmitting states corresponding to different frames of second two-dimensional images, the lens layer remains unchanged, the grating period of the grating layer remains unchanged, and positions of the light-transmitting areas in the grating layer vary.

**19.** A controller, wherein the controller is a controller in the display apparatus according to any one of claims 1 to 15, and the controller comprises:

a first control module, configured to: in a two-dimensional display mode, control the display module to display a first two-dimensional image, and control the light-transmitting module to be in a first light-transmitting state, so that the first two-dimensional image is displayed on a side that is of the light-transmitting module and that is away from the display module; and
a second control module, configured to: in a three-dimensional display mode, control the display module to display a second two-dimensional image, and control the light-transmitting module to be in a second light-transmitting state, so that a naked-eye three-dimensional image corresponding to the second two-dimensional image is displayed on the side that is of the light-transmitting module and that is away from the display module, wherein
the first light-transmitting state is different from the second light-transmitting state, and in the second light-transmitting state, a lens layer and a grating layer that are arranged in a direction close to or away from the display module are formed on the light-transmitting module.

**20.** A chip, wherein the chip comprises a programmable logic circuit and/or program instructions, and when the chip runs, the chip is configured to implement the display control method according to any one of claims 16 to 18.

**21.** A computer-readable storage medium, wherein the computer-readable storage medium stores instructions, and when the instructions are run on a computer, the computer is enabled to perform the display control method according to any one of claims 16 to 18.

L
R
01
02

FIG. 1

Light of the first two-dimensional image
A21
A11
03
A1
A
A2
A1
A11
A11
Light of a first two-dimensional image
Polarization direction of light
02

FIG. 2

Light of a naked-eye three-dimensional image
A21
A11
03
A1
A
A2
A1
A11
A11
Light of a second two-dimensional image
Polarization direction of light
02

FIG. 3

Light of the first two-dimensional image
A11
A1
03
A21
A4
A
A3
A2
A1
A11
Light of a first two-
dimensional image
Polarization
direction of light
02

FIG. 4

Light of a naked-eye three-dimensional image
A11
A1
03
A21
A4
A
A3
A2
A1
A11
Light of a second two-dimensional image
Polarization direction of light
02

FIG. 5

Light of the first two-dimensional image
A1
A21
Liquid crystal lens layer
A4
A3
A2
A1
A11
Polarization direction of light
A
A1
03
A21
Polarization control layer
A2
A1
A11
Light of a first two-dimensional image
Polarization direction of light
02

FIG. 6

Light of a naked-eye three-dimensional image
A1
A21
Liquid crystal lens layer
A4
A3
A2
A1
Polarization direction of light
A11
A
A1
03
Polarization control layer
A2
A21
A1
A11
Light of a first two-dimensional image
Polarization direction of light
02


FIG. 7

Viewpoint 1
...
Viewpoint N
01
02

FIG. 8

FOV
Lens formed by liquid crystals
f
P'
02

FIG. 9

P=ML
1222
1221
1211
FOV
122
12
121
13
f
11
L
P'

FIG. 10

Second electrode strip
Second surface electrode
B203
B201
B202
B2
B201
B3
12
B101
B102
B1
B101
13
11
First electrode strip
First surface electrode

FIG. 11

12
B2
B3
B1
B203
B204
B201
B06
B202
B06
B201
B101
B06
B102
B06
B101
B103
13
11
1222
1221
1222

FIG. 12

12
B1
B3
B2
B103
B101
B06
B102
B06
B101
B203
B201
B06
B202
B06
B201
B204
13
11
1222
1221
1222

FIG. 13

12
B2
B3
B1
B203
B204
B201
B06
B202
B06
B201
B101
B06
B102
B06
B101
B103
13
11

FIG. 14

12
B1
B3
B2
B103
B101
B06
B102
B06
B101
B203
B201
B06
B202
B06
B201
B204
13
11

FIG. 15

12
B2
B3
B1
B204
B203
B201
B06
B202
B06
B201
B101
B104
B06
B102
B06
B101
B103
13
11
1222
1221
1222

FIG. 16

12
B1
B3
B2
B101
B104
B06
B102
B06
B101
B103
B203
B201
B06
B202
B06
B201
B204
13
11
1222
1221
1222

FIG. 17

12
B2
B3
B1
B203
B204
B201
B06
B202
B06
B201
B101
B104
B06
B102
B06
B101
B103
13
11

FIG. 18

12
B1
B3
B2
B101
B104
B06
B102
B06
B101
B103
B203
B201
B06
B202
B06
B201
B204
13
11

FIG. 19

Axial meridian

FIG. 20

1211
Y
X
Axial meridian

FIG. 21

Y
X
1222
1221

FIG. 22

P=2L
122
12
121
L
13
11

FIG. 23

P=3L
122
12
121
L
13
11

FIG. 24

P=4L
122
12
121
L
13
11

FIG. 25

Viewpoint K
Grating area 1
122
12
121
13
11
Pixel area N
...
Pixel area 1
Viewpoint K
Grating area 2
122
12
121
13
11
Pixel area N
...
Pixel area 1
Viewpoint K
Grating area 3
122
12
121
13
11
Pixel area N
...
Pixel area 1

FIG. 26

Time sequence in which a grating area 1 is controlled to be a light-transmitting area
Time
Time sequence in which a grating area 2 is controlled to be a light-transmitting area
Time
Time sequence in which a grating area 3 is controlled to be a light-transmitting area
Time
Display time period of one frame of target naked-eye three-dimensional image


FIG. 27

S101: In a two-dimensional display mode, a controller controls a two-dimensional image display module to display a first two-dimensional image, and controls a light-transmitting module to be in a first light-transmitting state, so that the first two-dimensional image is displayed on a side that is of the light-transmitting module and that is away from the two-dimensional image display module

S102: In a three-dimensional display mode, control the two-dimensional image display module to display a second two-dimensional image, and control the light-transmitting module to be in a second light-transmitting state, so that a naked-eye three-dimensional image corresponding to the second two-dimensional image is displayed on the side that is of the light-transmitting module and that is away from the two-dimensional image display module, where the first light-transmitting state is different from the second light-transmitting state, and in the second light-transmitting state, a lens layer and a grating layer that are sequentially arranged in a direction close to or away from the two-dimensional image display module are formed on the light-transmitting module

FIG. 28

Controller
First control module 2901
Second control module 2902

FIG. 29

**INTERNATIONAL SEARCH REPORT**

International application No.
**PCT/CN2024/076552**

**A. CLASSIFICATION OF SUBJECT MATTER**

G02B30/00(2020.01)i

According to International Patent Classification (IPC) or to both national classification and IPC

**B. FIELDS SEARCHED**

Minimum documentation searched (classification system followed by classification symbols)

IPC:G02B27，G02B30，G02F1/1335+

Documentation searched other than minimum documentation to the extent that such documents are included in the fields searched

Electronic data base consulted during the international search (name of data base and, where practicable, search terms used)

CNABS; CNTXT; ENTXTC; VEN; WPABS; ENTXT; CJFD: 二维显示, 三维显示, 透镜, 光栅, lens, grid+, "2D", two 1w dimension+, "3D", three 1w dimension+, liquid+ 1w crystal+, electric+ 2d control+

**C. DOCUMENTS CONSIDERED TO BE RELEVANT**

| Category* | Citation of document, with indication, where appropriate, of the relevant passages | Relevant to claim No. |
|---|---|---|
| X | CN 102749715 A (AU OPTRONICS CORPORATION) 24 October 2012 (2012-10-24) description, paragraphs 63-87, and figures 1-14 | 1-21 |
| X | CN 102243387 A (UNIVERSITY OF SHANGHAI FOR SCIENCE AND TECHNOLOGY) 16 November 2011 (2011-11-16) description, paragraphs 13-37, and figures 1-10 | 1-21 |
| X | US 2012057229 A1 (KIKUCHI RYO et al.) 08 March 2012 (2012-03-08) description, paragraphs 33-58, and figures 1-4 | 1-2, 7-21 |
| A | CN 103246071 A (BOE TECHNOLOGY GROUP CO., LTD.) 14 August 2013 (2013-08-14) entire document | 1-21 |
| A | CN 104345465 A (JURONG FUXIN ELECTRONICS CO., LTD.) 11 February 2015 (2015-02-11) entire document | 1-21 |
| A | CN 206002779 U (HEFEI XINSHENG OPTOELECTRONICS TECHNOLOGY CO., LTD. et al.) 08 March 2017 (2017-03-08) entire document | 1-21 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 May 2024** | **13 May 2024** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2024/076552**

**C. DOCUMENTS CONSIDERED TO BE RELEVANT**

| Category* | Citation of document, with indication, where appropriate, of the relevant passages | Relevant to claim No. |
|---|---|---|
| A | US 2007236619 A1 (WINTEK CORPORATION) 11 October 2007 (2007-10-11) entire document | 1-21 |
| A | US 2013107174 A1 (SAMSUNG DISPLAY CO., LTD. et al.) 02 May 2013 (2013-05-02) entire document | 1-21 |

Form PCT/ISA/210 (second sheet) (July 2022)

**INTERNATIONAL SEARCH REPORT**
**Information on patent family members**

International application No.
**PCT/CN2024/076552**

| Patent document cited in search report | Publication date (day/month/year) | Patent family member(s) | Publication date (day/month/year) |
|---|---|---|---|
| CN 102749715 A | 24 October 2012 | TW 201341915 A | 16 October 2013 |
| | | TWI 471665 B | 01 February 2015 |
| CN 102243387 A | 16 November 2011 | None | |
| US 2012057229 A1 | 08 March 2012 | WO 2010122690 A1 | 28 October 2010 |
| CN 103246071 A | 14 August 2013 | WO 2014176820 A1 | 06 November 2014 |
| | | US 2016116752 A1 | 28 April 2016 |
| | | US 9869870 B2 | 16 January 2018 |
| CN 104345465 A | 11 February 2015 | None | |
| CN 206002779 U | 08 March 2017 | WO 2018049814 A1 | 22 March 2018 |
| | | US 2018314075 A1 | 01 November 2018 |
| | | US 10534190 B2 | 14 January 2020 |
| US 2007236619 A1 | 11 October 2007 | TW 200741287 A | 01 November 2007 |
| US 2013107174 A1 | 02 May 2013 | KR 20130046116 A | 07 May 2013 |
| | | US 2016116753 A1 | 28 April 2016 |
| | | US 9696560 B2 | 04 July 2017 |
| | | US 9229243 B2 | 05 January 2016 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310122334